**Europäisches Patentamt**

**European Patent Office**

**Office européen des brevets**

(11)  **EP 3 319 811 B1**

(12)  **EUROPEAN PATENT SPECIFICATION**

(45) Date of publication and mention
of the grant of the patent:
**28.08.2019  Bulletin 2019/35**

(21) Application number: **16741379.8**

(22) Date of filing: **11.07.2016**

(51) Int Cl.:
*B42D 25/425* (2014.01)   *B42D 25/29* (2014.01)
*B42D 25/45* (2014.01)   *B42D 25/351* (2014.01)
*B42D 25/21* (2014.01)   *G06K 7/14* (2006.01)
*B05D 5/06* (2006.01)   *G06K 9/00* (2006.01)
*G06K 7/10* (2006.01)

(86) International application number:
**PCT/GB2016/052087**

(87) International publication number:
**WO 2017/009622 (19.01.2017 Gazette 2017/03)**

(54) **SECURITY SUBSTRATES, SECURITY DEVICES AND METHODS OF MANUFACTURE THEREOF**

SICHERHEITSSUBSTRATE, SICHERHEITSVORRICHTUNGEN UND VERFAHREN ZUR
HERSTELLUNG DAVON

SUBSTRATS DE SÉCURITÉ, DISPOSITIFS DE SÉCURITÉ ET LEURS PROCÉDÉS DE
FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority:  **10.07.2015  GB 201512119**

(43) Date of publication of application:
**16.05.2018  Bulletin 2018/20**

(73) Proprietor: **De La Rue International Limited
Basingstoke, Hampshire RG22 4BS (GB)**

(72) Inventors:
 • **HOLMES, Brian William
 Fleet
 Hampshire GU51 5HZ (GB)**
 • **SUYAL, Navin
 Basingstoke
 Hampshire RG22 4BS (GB)**

(74) Representative: **Gill Jennings & Every LLP
The Broadgate Tower
20 Primrose Street
London EC2A 2ES (GB)**

(56) References cited:
**WO-A1-2014/118569   WO-A1-2015/011494
US-B1- 6 500 526**

## Description

This invention relates to security substrates and security devices. The term security substrates encompasses security documents such as banknotes, cheques, passports, identity cards, certificates of authenticity, fiscal stamps and other secure documents, as well as security articles such as security threads, strips, patches, foils and inserts, which may ultimately be applied to security documents. Security devices are typically used on security documents, security articles and other items, in order to confirm their authenticity. Methods of manufacturing security articles, security documents and security devices are also disclosed.

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moire interference devices and moire magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moire interference and other mechanisms relying on parallax such as venetian blind devices, and also devices which make use of focusing elements such as lenses, including moire magnifier devices, integral imaging devices and so-called lenticular devices.

Moire magnifier devices (examples of which are described in EP-A-1695121, WO-A-94/27254, WO-A-2011/107782 and WO2011/107783) make use of an array of focusing elements (such as lenses or mirrors) and a corresponding array of microimages, wherein the pitches of the focusing elements and the array of microimages and/or their relative locations are mismatched with the array of focusing elements such that a magnified version of the microimages is generated due to the moire effect. Each microimage is a complete, miniature version of the image which is ultimately observed, and the array of focusing elements acts to select and magnify a small portion of each underlying microimage, which portions are combined by the human eye such that the whole, magnified image is visualised. This mechanism is sometimes referred to as "synthetic magnification". The magnified array appears to move relative to the device upon tilting and can be configured to appear above or below the surface of the device itself. The degree of magnification depends, inter alia, on the degree of pitch mismatch and/or angular mismatch between the focusing element array and the microimage array.

Integral imaging devices are similar to moire magnifier devices in that an array of microimages is provided under a corresponding array of lenses, each microimage being a miniature version of the image to be displayed. However here there is no mismatch between the lenses and the microimages. Instead a visual effect is created by arranging for each microimage to be a view of the same object but from a different viewpoint. When the device is tilted, different ones of the images are magnified by the lenses such that the impression of a three-dimensional image is given.

"Hybrid" devices also exist which combine features of moire magnification devices with those of integral imaging devices. In a "pure" moire magnification device, the microimages forming the array will generally be identical to one another. Likewise in a "pure" integral imaging device there will be no mismatch between the arrays, as described above. A "hybrid" moire magnification / integral imaging device utilises an array of microimages which differ slightly from one another, showing different views of an object, as in an integral imaging device. However, as in a moire magnification device there is a mismatch between the focusing element array and the microimage array, resulting in a synthetically magnified version of the microimage array, due to the moire effect, the magnified microimages having a three-dimensional appearance. Since the visual effect is a result of the moire effect, such hybrid devices are considered a subset of moire magnification devices for the purposes of the present disclosure. In general, therefore, the microimages provided in a moire magnification device should be substantially identical in the sense that they are either exactly the same as one another (pure moire magnifiers) or show the same object/scene but from different viewpoints (hybrid devices).

Moire magnifiers, integral imaging devices and hybrid devices can all be configured to operate in just one dimension (e.g. utilising cylindrical lenses) or in two dimensions (e.g. comprising a 2D array of spherical or aspherical lenses).

Lenticular devices on the other hand do not rely upon magnification, synthetic or otherwise. An array of focusing elements, typically cylindrical lenses, overlies a corresponding array of image sections, or "slices", each of which depicts only a portion of an image which is to be displayed. Image slices from two or more different images are interleaved and, when viewed through the focusing elements, at each viewing angle, only selected image slices will be directed towards the viewer. In this way, different composite images can be viewed at different angles. However it should be appreciated that no magnification typically takes place and the resulting image which is observed will be of substantially the same size as that to which the underlying image slices are formed. Some examples of lenticular devices are described in US-A-4892336, WO-A-2011/051669, WO-A-2011051670, WO-A-2012/027779 and US-B-6856462. More recently, two-dimensional lenticular devices have also been developed and examples of these are disclosed in British patent application numbers 1313362.4 and 1313363.2. Lenticular devices have the advantage that different images can be displayed at different viewing angles, giving rise to the possibility of animation and other striking visual effects which are not possible using the moire magnifier or integral imaging techniques.

Arrays of lenses or other focussing elements can also be used as a security device on their own (i.e. without a corresponding image array), since they can be used to exhibit a magnified or distorted view of any background they may be placed against, or scene viewed therethrough. This effect cannot be replicated by photocopying or similar.

Devices incorporating focusing element arrays can be deployed on conventional, e.g. paper-based, security documents, typically formed as a security article, either on one surface or on a transparent strip or patch applied over a window in the document. However, such devices are particularly well suited to use on security documents based on a polymer substrate since if this is transparent, the document substrate itself can then be utilised as an optical spacer between the focussing element on one side and an image which is to be focussed on the other. Nonetheless, the manufacture of security substrates (i.e. security articles and security documents) incorporating these devices remains a challenge.

Further, whilst moire magnifiers, integral imaging devices, lenticular devices and other devices making use of focussing element arrays have proved effective security devices, there is a constant need to achieve new effects in order to stay ahead of would-be counterfeiters.

US-A-2013/0270813 discloses some approaches for manufacturing focusing elements and achieving different effects.

Patent document US 6,500,526 B1, discloses an image-containing retroreflective sheeting comprising a layer of transparent microsphere lenses; a transparent polymeric spacing layer; a reflective layer; and a topcoat overlying and conforming to the top surface of the lenses and having a flat top surface.

In accordance with a first aspect of the present invention, a security substrate comprises:

a polymer substrate having first and second surfaces;

an array of focussing elements in the form of a surface relief across a first region of the polymer substrate, the surface relief being defined in the surface of a transparent base layer, wherein the transparent base layer comprises either the polymer substrate or a layer disposed thereon;

an optical adjustment layer disposed on the transparent base layer across a second region of the polymer substrate, which second region includes at least the first region, the optical adjustment layer having a first surface in contact with the surface relief of the transparent base layer and an opposing second surface having a profile which is not operative to focus visible light, the optical adjustment layer comprising a first transparent material extending across a first sub-region of the array of focussing elements, the first sub-region comprising all or only part of the first region, the first transparent material having a refractive index different from that of the transparent base layer, whereby the focussing element(s) in the first sub-region of the array are functional focussing element(s); and

at least one first masking layer, comprising a reflective and/or non-transparent material, disposed over the optical adjustment layer across a third region of the polymer substrate, the third region defining at least one gap in the first masking layer(s) which gap includes at least part of the first sub-region, such that functional focusing elements of the array are revealed through the at least one gap.

It will be appreciated that the security substrate could be a polymer-based security document, such as a polymer banknote, or could be a security article such as a security thread, strip or patch. According to which type of security substrate is being formed, the type of polymer substrate will vary (e.g. that for a security document will generally be thicker, say 70 microns, compared with that for a security article, say 35 microns), and also the nature of the masking layer may be different. For instance in a security document the masking layer will typically be an opacifying layer configured to act as a background for printed graphics thereon, whereas in a security article a greater variety of masking layers could be employed and could either be solely opacifying or provide some additional effect as described below. In both cases the masking layer should substantially conceal underlying areas from view in reflected light but may be transparent or semi-transparent in transmitted light. In all cases the masking layer is preferably non-fibrous (e.g. formed of a polymeric material, ink, deposited films such as dielectrics, or metals or alloys) and/or may preferably be a printed or coated layer. The masking layer is also preferably supported by the polymer substrate (ultimately, although they will not be in direct contact at least in the vicinity of the optical adjustment layer) - that is, the masking layer is not a self-supporting layer but rather is carried by the underlying substrate.

By providing an optical adjustment layer over the surface relief defining the focussing element array, a number of benefits are achieved. Since the optical adjustment layer extends in this case over the whole of the focussing element array (and preferably beyond, if the second region is larger than the first region), the variations in surface height as would be presented by the surface relief are filled-in by the optical adjustment layer, resulting in a smoother outer surface (formed by the second surface of the optical adjustment layer, which is preferably planar, i.e. flat). This makes the substrate better-suited to subsequent application processes and particularly the application of the at least one masking layer, which preferably is applied by a printing process such as gravure. In a conventional scenario where a focussing element array has been formed on a polymer substrate this will result in variations of the surface height of the substrate leading to poor performance of subsequent application processes on that surface. For example, in the case of gravure printing, the presence of localised raised areas on the substrate may cause movement of the gravure cylinders towards and away from the substrate and/or damage to the gravure cylinders. In the context of polymer-based security documents, one approach to such problems has been to avoid printing the opacifying layers (i.e. the masking layers) on or closely adjacent to the raised focusing element array area, forming a large window area around the device. This necessarily means that the whole focussing element array is exposed through the window. However, by providing the document with an optical adjustment layer as presently disclosed, a substantially flat surface can be presented for application of the opacifying layers thereon, which significantly reduces printing problems and allows the size, shape and position of the at least one gap (i.e. the window) to be determined freely, allowing for a wider range of design options. Similar benefits are achieved in the context of a security article. It should be noted that the masking layers need not be applied directly in contact with the second surface of the optical adjustment region but rather some intermediate layer(s) may be disposed therebetween, such as a primer.

So as not to inhibit the function of (at least some of) the focussing elements, at least part of the optical adjustment layer (that part covering the first sub-region of the focussing element array) is formed of a first transparent material with a refractive index different from that of the transparent base material, as will be discussed further below. This preserves the focussing nature of the interface between the transparent base material and the first transparent material, defined by the surface relief. As such, the focussing elements in that first sub-region remain functional as focussing elements - that is, they focus light with a focal length less than infinity. The second surface of the optical adjustment layer is not shaped so as to focus light and preferably simply transmits light straight through (i.e. parallel incident light rays remain parallel upon crossing into the second surface), so does not contribute to the focussing effect. It will be understood that in the first aspect of the invention, the optical adjustment layer as a whole will extend across at least the entire focussing element array and so in cases where the first sub-region to which the first transparent material is applied does not include the whole of the focussing element array, the optical adjustment layer will include one or more additional materials, which will preferably also be transparent, laterally offset from the first sub-region so as to cover the remainder of the second region. These may include second and/or third transparent materials in respective second and/or third sub-regions of the focussing element array, as defined below. In particularly preferred implementations, the second region carrying the optical adjustment layer encompasses substantially the whole of the polymer substrate, so that the whole surface presented for application of the opacifying layers is substantially level.

The polymer substrate is preferably transparent (though may carry a coloured tint) and is typically formed of a polymer such as polypropylene (PP) (most preferably bi-axially oriented PP (BOPP)), polyethylene terephthalate (PET), polyethylene (PE), polycarbonate (PC), polyvinyl chloride (PVC), nylon, acrylic, Cyclic Olefin Polymer (COP) or Cyclic Olefin Copolymer (COC), or any combination thereof. The polymer substrate could be monolithic or multi-layered. In the case of a security document, typically the thickness of the polymer substrate is in the range 50 to 100 microns, more preferably 60 to 80 microns in the case of a banknote although could be greater in the case of a card-type security document (e.g. a bank card or identity card), or a sheet or page suitable for a passport. For a security article such as a security thread, strip or patch, the thickness of the polymer substrate is generally lower, e.g. in the range 20 to 50 microns, preferably 30 to 40 microns. If the surface relief is formed in an additional layer on the surface of the polymer substrate, this could be formed of a curable resin, for example. It should be noted that this additional layer may not be directly in contact with the first surface of the polymer substrate but one or more intermediate layers could be disposed between them, such as a primer layer.

In particularly preferred embodiments, the at least one gap in the first masking layer(s) reveals only a subset of the functional focusing elements of the array, other functional focusing elements of the array being substantially concealed by the first masking layer(s), at least when the security substrate is viewed in reflected light from the side of the security substrate on which the first masking layer(s) are disposed. Thus, the shape of the perimeter of the optically active area is defined at least in part, preferably entirely, by the gap(s) in the first masking layer rather than by the extent of the focussing element array. The at least one gap preferably takes the form of indicia (i.e. an item of information), such as an alphanumeric character, a symbol, logo or similar. This increases the complexity and therefore the security level of the security device. It should be noted that where only the first sub-region of the device retains functioning focusing elements, the at least one gap will reveal only part of that first sub-region. However, where other sub-regions of the array also remain functional (e.g. as the result of the application of a second transparent material also with a refractive index different from that of the transparent base layer), the at least one gap may reveal any combination of parts of the sub-regions containing functional focussing elements, provided that not all such functional focussing elements are revealed.

In one preferred embodiment the first sub-region includes substantially the whole of the first region, such that substantially all of the focussing elements are functional focussing elements. That is, the first transparent material extends over the whole of the array of focussing elements. Still preferably the first transparent material extends across the second region of the substrate. In other words, the whole of the optical adjustment layer is formed by the same first transparent material. This requires the fewest number of processing steps to achieve a good surface for application of the masking layer(s).

As alluded to above, more complex effects can be achieved by forming the optical adjustment layer of more than one different transparent material in different respective sub-regions of the array of focussing elements. Hence in a preferred embodiment, the optical adjustment layer further comprises a second transparent material extending across a second sub-region of the array of focussing elements, the second transparent material having a refractive index different from that of the transparent base material and from the first transparent material such that the focussing element(s) in the second sub-region of the array are functional focussing element(s) with a focal length different from that of the focussing elements in the first sub-region of the array. If the focussing elements are of uniform shape and size in the first and second sub-regions (as is preferred), the different refractive indices of the first and second transparent materials applied to them will result in different focal lengths of the focussing elements in the respective sub-regions. Generally and as an approximation, the focal length of the focussing elements in the $m^{th}$ sub-region will follow the expression:

$$f \propto \frac{r}{(n_B - n_m)} = \frac{r}{\Delta n_m}$$

where r is the radius of the focussing elements, $n_B$ is the refractive index of the transparent base material, $n_m$ is the refractive index of the $m^{th}$ transparent material (forming part of the optical adjustment layer), and $\Delta n_m$ is the refractive index difference in the $m^{th}$ sub-region. Therefore, by applying first and second transparent materials having different refractive indices (from one another and from the transparent base layer) to different parts of the focusing element array, the focal length of the elements can be varied across the device without requiring the surface relief itself to have different parameters in different parts of the device. This can be used to create complex optical effects, including arranging portions of the device to display an image in focus whilst other portions do not, or providing two images at the different focal lengths so that two different focussed images can be displayed simultaneously by the respective sub-regions. Any number of additional transparent materials with still different refractive indices (from one another and from the transparent base material) could be provided in different sub-regions of the focussing element array.

Advantageously, the first transparent material and, if provided, the second transparent material have respective refractive indices which differ from that of the transparent base layer by at least 0.1, preferably at least 0.15, more preferably at least 0.2. The greater the difference in refractive index ($\Delta n_m$), the greater the radius r of the focussing elements can be whilst still achieving a noticeable focusing effect. However, the difference in refractive index should preferably be no more than 0.5, which is the typically refractive index difference between average transparent materials and air. Preferably either the transparent base material or the (first and second) transparent material will be a "high refractive index" (HRI) material, which here is taken to mean a refractive index of at least 1.55, whilst the other will be a "low refractive index" (LRI) material, meaning here a refractive index of 1.45 or lower. Examples of suitable materials are given below.

In still further preferred embodiments, in addition or as an alternative to the second transparent material, the optical adjustment layer may further comprise a third transparent material extending across a third sub-region of the array of focussing elements, the third transparent material having a refractive index substantially the same as that of the transparent base material, such that the focussing element(s) in the third sub-region are non-functional focussing element(s). That is, the difference in refractive index $\Delta n_m$ in the third sub-region is so small that any focusing effect is negligible since the focal length tends towards infinity. In practice, the third transparent material may have a refractive index within about 0.1 of that of the transparent base material. The third transparent material may be of the same composition of the transparent base material, but this is not essential. By inhibiting the function of the focusing elements in the third sub-region, complex designs can be achieved since the perimeter of the optically active part of the device can be configured as desired by the arrangement of the various sub-regions.

In especially preferred embodiments, the various sub-regions (i.e. the first sub-region and the second and/or third sub-regions according to which are provided) are arranged so as to form indicia (i.e. an item of information), preferably alphanumeric character(s), symbols(s), logo(s), graphics or the like. This indicia may be the same as any conveyed by the at least one gap in the first masking layer(s) or could be different.

The complexity of the device can be increased still further by arranging the first, second and/or third transparent materials to have different optical detection characteristics from one another and/or to respectively comprise a plurality of transparent materials having different optical detection characteristics from one another, the transparent materials with different optical detection characteristics being located in respective areas of the first region laterally offset from one another. That is, the first transparent material could in fact comprise two or more first transparent materials with different optical detection characteristics (but the same refractive index) arranged in different lateral areas of the first sub-region, as could the second transparent material in the second sub-region and so on. The arrangement of areas with different optical detection characteristics may follow the demarcation between the sub-regions of different refractive indices, or may not. The different optical detection characteristics could be any of: different visible colours, different fluorescence, different luminescence or different phosphorescence, for example. Preferably, the laterally offset areas are arranged so as to form indicia (i.e. an item of information), preferably alphanumeric character(s), symbols(s), logo(s), graphics or the like. This indicia may be the same or different from any exhibited by the arrangement of sub-regions and/or from any exhibited by the opacifying layer(s).

As already mentioned, the masking layer(s) are preferably non-fibrous (e.g. formed of a polymeric material, ink, deposited films such as dielectrics, or metals or alloys) and/or may preferably printed or coated layer(s). The masking layer(s) are also preferably supported by the polymer substrate (ultimately, although they will not be in direct contact at least in the vicinity of the optical adjustment layer) - that is, the masking layer(s) are not self-supporting but rather are carried by the underlying substrate.

Where the security substrate is a security document, the masking layer(s) are preferably opacifying layer(s). Opacifying layer(s) comprise non-transparent material which is preferably a non-fibrous, polymeric material which will scatter light (as opposed to allowing clear light transmission therethrough), and may be translucent to a degree. Typically, multiple opacifying layers will be applied to the first surface of the polymer substrate to increase the overall optical density. For example, three or more such layers may be disposed on the first surface In preferred examples, each individual opacifying layer may have an optical density in the range 0.1 to 0.5, more preferably 0.1 to 0.4, most preferably 0.1 to 0.3 (as measured on a transmission densitometer, with an aperture area equivalent to that of a circle with a 1mm diameter - a suitable transmission densitometer is the MacBeth TD932). The individual opacifying layers may or may not be of the same composition as one another - for example, in some preferred cases at least one of the opacifying layers will contain electrically conductive particles (desirable to reduce the effects of static charge), whereas others will not - but nonetheless, preferably, all of the opacifying layers are substantially the same colour as one another, most preferably a light and bright colour such as white (including off-white) or grey. In preferred implementations, the opacifying layers each have a brightness L* in CIE L*a*b* colour space of at least 70, preferably at least 80 and more preferably at least 90. For example, the opacifying layer(s) could comprise a light pigment such as titanium oxide, dispersed in a suitable binder or resin.

In other cases, the masking layer(s) could comprise other types of material, and could be reflective. For example, the masking layer(s) could comprise metal, metallic ink, iridescent ink, colour-shifting ink, interference thin film structures, interference thin film inks, liquid crystal materials or high refractive index materials. Thus, the reflective material could additionally be opaque or at least non-transparent, such that in transmitted light the masking layer either blocks a view of what is under it, or reduces its visibility. For example, the masking layer could be a thin semi-transparent metallic layer, or a layer of iridescent ink. In both cases in reflected light the masking layer will substantially conceal underlying areas whilst in transmitted light they may be visible. Some reflective materials that can be used for the masking layer can also be substantially clear (transparent) in transmitted light, whilst still concealing underneath areas in reflected light, such as high refractive index materials like ZnS.

Preferably, the security document further comprises at least one second masking layer comprising a reflective and/or non-transparent material disposed on the second surface of the polymer substrate, the at least one second masking layer preferably defining at least one gap at least partially overlapping the at least one gap in the first opacifying layer. The second masking layer(s) can be of any of the same types as the first masking layer(s). If the second masking layer(s) include a gap at least partially overlapping the gap(s) in the first opacifying layer(s) a full window will be formed, i.e. a transparent portion of the security susbtrate. In this case the gap(s) in the second masking layers preferably correspond in size, shape and location to those in the first opacifying layers, although this is not essential. If the second masking layer(s) extend across all or part of the gap(s) in the first masking layer(s) a half window will be formed, i.e. a portion of the substrate having a lower opacity than that of its surroundings.

The array of focussing elements could take various different forms. In a first preferred embodiment, the array of focussing elements comprises a convex surface relief structure defined in the surface of the transparent base material (i.e. each focussing element comprises a protrusion formed of the transparent base material), the transparent base material having a higher refractive index than that of the first transparent material and, if provided, the second transparent material. Convex focussing elements have the advantage that their structure is more resistant to folding/crumpling damage since if the structure is flexed this distortion will tend to be absorbed by the portions of the transparent base material between the focussing elements, since these will typically be thinner. As such, the shape of the focussing elements themselves is preserved. However, to obtain the desired focussing effect the refractive index of the first transparent material forming the optical adjustment later must be less than that of the transparent base material. Typically, the lower the refractive index of a material the more soft, lower density and generally less robust the material. Therefore difficulties can be encountered in that the first transparent material in this case may suffer damage during handling of the security substrate. To reduce this effect, in this case the transparent base material preferably has a very high refractive index (e.g. 1.6 or more) so that a first transparent material with a moderate refractive index (e.g. 1.5 or less) can be utilised, which will allow for a corresponding increase in its structural stability.

Nonetheless, in view of the above it may be preferable that the array of focussing elements comprises a concave surface relief structure defined in the surface of the transparent base material (i.e. each focussing element comprises a depression formed into the transparent base material), the transparent base material having a lower refractive index than that of the first transparent material and, if provided, the second transparent material. In this way, the less robust, lower refractive index material from which the transparent base layer is formed (which will typically be a layer on the surface of the polymer substrate in this case) can be protected by a more robust, higher refractive index first transparent material forming (all or part of) the optical adjustment layer. It is particularly advantageous to provide concave focussing elements with an overcoating in this way since uncoated concave focussing elements are particularly sensitive to the accrual of soil in each depression, which is prevented by the presence of the first transparent layer thereover. This is less of a concern with convex focussing elements since here soil will tend to accumulate in the spaces between each focussing elements, thereby having less effect on their appearance.

The focusing elements may comprise lenses and/or mirrors. Lenses are preferred for many applications since this preserves the transparent nature of the security device. Advantageously, the array of focussing elements comprises cylindrical lenses, spherical lenses, aspherical lenses, elliptical lenses or Fresnel lenses. Preferably the array of focusing elements has a one- or two-dimensional periodicity in the range 5 to 200 microns, preferably 10 to 70 microns, most preferably 20 to 40 microns. The periodicity (or pitch) of the array is typically substantially equal to the focussing elements' diameter (i.e. 2r). For a cylindrical lens the "diameter" means the lens width.

As indicated above, the focusing element array could by itself constitute a security device since any image or scene viewed through it will undergo a modification due to the focusing effect of the functional lenses. For example, the focusing element array could be utilised to view an image provided on another part of the security substrate, e.g. by bending the security substrate to position the focusing element array over that image. However, in particularly preferred examples, the security substrate further comprises an image array in at least part of the first sub-region of the substrate, the image array located in a plane spaced from that of the focussing elements by a distance substantially corresponding to a focal length of the functional focusing elements in the at least part of the first sub-region, such that the functional focusing elements in the first sub-region exhibit a substantially focussed image of the image array, the image array preferably extending across substantially all of the first region. The image array can be configured to co-operate with the focusing element array to generate an optically variable effect of which examples will be given below.

Preferably, the image array is located on the second surface of the polymer substrate. This could be directly on the second surface of the polymer substrate or on an optical spacing layer disposed thereon.

In other embodiments, and particularly where the transparent base layer comprises a layer disposed on the first surface of the polymer substrate, the image array may be located on the first surface of the polymer substrate. In this case the layer forming the transparent base layer itself provides the necessary spacing between the focussing elements and the image array.

In some preferred embodiments, the image array comprises a microimage array, and the pitches of the focusing element array and of the microimage array and their relative orientations are such that the focusing element array co-operates with the microimage array to generate a magnified version of the microimage array due to the moire effect. That is, the focussing element array and the image array combine to form a moire magnification device (at least in the first sub-region).

In other preferred embodiments, the image array comprises a microimage array, the microimages all depicting the same object from a different viewpoint, and the pitches and orientation of the focusing element array and of the microimage array are the same, such that the focusing element array co-operates with the microimage array to generate a magnified, optically-variable version of the object. Thus, the focussing element array and the image array combine to form an integral imaging device (at least in the first sub-region).

In still further preferred embodiments, the image array comprises a set of first image elements comprising portions of a first image, interleaved with a set of second image elements comprising portions of a second image, the focusing element array being configured such that each focusing element can direct light from a respective one of the first image elements or from a respective one of the second image elements therebetween in dependence on the viewing angle, whereby depending on the viewing angle the array of focusing elements directs light from either the set of first image elements or from the second image elements therebetween, such that as the device is tilted, the first image is displayed to the viewer at a first range of viewing angles and the second image is displayed to the viewer at a second, different range of viewing angles. Hence, the focussing element array and the image array combine to form a lenticular device (at least in the first sub-region).

The image array could be provided only in the first sub-region of the device. However, more preferably the image array is provided over a wider area, advantageously over substantially the whole of the first region, such that the whole of the first sub-region exhibits the focussed image without requiring accurate registration of the image array to the optical adjustment layer. In this way, the deposition of the first transparent material by itself will determine the area across which the focussed image is exhibited.

As mentioned above, in particularly preferred examples, the security substrate is a security document, preferably any of a banknote, an identity document, a passport, a licence, a certificate, a cheque, a visa or a stamp, and the at least one first masking layer is at least one opacifying layer comprising a non-transparent material.

In other cases security substrate may be a security article, preferably a security thread, strip, patch or foil.

The first aspect of the invention also provides a method of manufacturing a security substrate, comprising:

> providing a polymer substrate having first and second surfaces;
> forming an array of focussing elements across a first region of the polymer substrate as a surface relief in the surface of a transparent base layer, wherein the transparent base layer comprises either the polymer substrate or a layer disposed thereon;
> applying an optical adjustment layer onto the transparent base layer across a second region of the polymer substrate, which second region includes at least the first region, the optical adjustment layer having a first surface in contact with the surface relief of the transparent base layer and an opposing second surface having a profile which is not operative to focus visible light, the optical adjustment layer comprising a first transparent material extending across a first sub-region of the array of focussing elements, the first sub-region comprising all or only part of the first region, the first transparent material having a refractive index different from that of the transparent base layer, whereby the focussing element(s) in the first sub-region of the array are functional focussing element(s); and
applying at least one first masking layer, comprising a reflective and/or non-transparent material, over the optical adjustment layer across a third region of the polymer substrate, the third region defining at least one gap in the first masking layer(s) which gap includes at least part of the first sub-region, such that functional focusing elements of the array are revealed through the at least one gap.

The resulting security document provides all the benefits already discussed above.

In some preferred embodiments, the array of focusing elements is formed by applying a layer of transparent curable material, constituting the transparent base layer, to the first surface of the substrate, forming the layer in accordance with the surface relief and curing the layer, preferably by exposure to radiation, to thereby fix the surface relief. This process is typically referred to as "cast-curing". Alternatively, the additional layer in which the surface relief is formed could be laminated to the polymer substrate (optionally via a support layer and/or an adhesive) after the surface relief has been formed on it. This would be the case where the focussing element array is formed on an article such as a stripe or patch and then affixed to the surface of the security document.

In other preferred embodiments, the array of focusing elements is formed by embossing the first surface of the polymer substrate, the polymer substrate constituting the transparent base layer. This is desirable since the overall thickness of the substrate can be kept to a minimum.

The optical adjustment layer is preferably formed by applying at least the first transparent material across the first sub-region region by printing or coating. Where the optical adjustment layer comprises a single material (the first transparent material) this may be applied by an all-over coating process. However, preferably the transparent material(s) are selectively applied to the respective sub-regions e.g. by flexographic printing, screen printing or gravure printing.

As noted above the second surface of the optical adjustment layer is preferably flat and whilst in some cases this may result automatically from the application method, in other cases the method further comprises smoothing the second surface of the optical adjustment layer, preferably by calendaring or polishing.

The method can be adapted as necessary to provide the security substrate with any of the optional features discussed above.

In accordance with a second aspect of the invention, a security device is provided, comprising:

> a polymer substrate having first and second surfaces;
> an array of focussing elements in the form of a surface relief across a first region of the polymer substrate, the surface relief being defined in the surface of a transparent base layer, wherein the transparent base layer comprises either the polymer substrate or a layer disposed thereon, the array of focussing elements being configured to have a uniform base focal length across the first region when the surface relief is in contact with air;

an optical adjustment layer disposed on the transparent base layer across a second region of the polymer substrate, which second region includes at least a first sub-region of the array of focussing elements, the first sub-region not including the whole of the first region, the optical adjustment layer having a first surface in contact with the surface relief and an opposing second surface having a profile which is not operative to focus visible light, the optical adjustment layer comprising a first transparent material extending only across the first sub-region of the array of focussing elements, the first transparent material having a refractive index different from that of the transparent base layer, whereby the focussing element(s) in the first sub-region of the array have a first focal length which is different from the base focal length; and

a first image array in at least part of the first sub-region of the substrate, the first image array being located in a plane spaced from that of the focussing elements by a distance substantially corresponding to the first focal length, such that the focusing elements in the first sub-region exhibit a substantially focussed image of the first image array and the focusing elements outside the first sub-region do not.

By confining the first transparent material to only a first sub-region of the focussing element array, which here includes only a part and not all of the focussing element array, only the focussing elements in the first sub-region will have a focal length suitable for imaging the first image array and those focussing elements elsewhere will not. Hence the perimeter within which a focussed version of the first image array will be visible (which may be an optically variable effect as discussed below) is determined at least in part by the application of the first transparent material and not by the formation of the surface relief defining the focussing elements. If the first image array is provided across an area including the whole of the first sub-region and preferably beyond, the perimeter will be determined by the application of the first transparent material alone. This enables complex visual effects to be created through the design and composition of the optical adjustment layer, without requiring the surface relief itself to be varied across the device. This also lends itself well to personalisation or customisation of each device, or of a series of devices, without requiring any redesign of the tools for forming the focussing elements.

The optical adjustment layer here could consist solely of the first transparent material and be confined to the first sub-region, the optical adjustment layer being absent elsewhere as discussed below. In other cases, the optical adjustment layer could comprise one or more additional (preferably transparent) materials such as the second and/or third transparent materials discussed below, arranged in respective laterally offset sub-regions.

As in the first aspect of the invention, where the optical adjustment layer is present, the variations in surface height as would be presented by the surface relief are filled-in by the optical adjustment layer, resulting in a smoother outer surface (formed by the second surface of the optical adjustment layer, which is preferably planar, i.e. flat). If the optical adjustment layer in the second aspect of the invention comprises additional materials such that the optical adjustment layer extends across the whole focussing element array (and preferably beyond), the same benefits as in the first aspect of the invention may additionally be achieved. In particularly preferred implementations, the second region carrying the optical adjustment layer encompasses substantially the whole of the polymer substrate, so that the whole surface presented for application of the opacifying layers is substantially level. As in the first aspect, again the second surface of the optical adjustment layer is not shaped so as to focus light and preferably simply transmits light straight through (i.e. parallel incident light rays remain parallel upon crossing into the second surface), so does not contribute to the focussing effect.

The same considerations apply to the nature of the polymer substrate and of any additional layer provided thereon to form the transparent base material as in the first aspect of the invention. In particular, one or more intermediate layers may exist between the polymer substrate and the transparent base material, such as a primer.

As discussed above, the focal length of the focussing elements in any one sub-region of the array will depend on the difference in refractive index between the transparent base layer and the composition of the optical adjustment layer in that sub-region, in accordance with the expression:

$$f \propto \frac{r}{(n_B - n_m)} = \frac{r}{\Delta n_m}$$

where r is the radius of the focussing elements, $n_B$ is the refractive index of the transparent base material, $n_m$ is the refractive index of the $m^{th}$ transparent material (forming part of the optical adjustment layer), and $\Delta n_m$ is the refractive index difference in the $m^{th}$ sub-region.

In particularly preferred embodiments, the first image array is located on the second surface of the polymer substrate. This could be directly on the second surface or on an optical spacing layer applied thereto. In this way, the polymer substrate provides the necessary distance (corresponding to the first focal length) between the focussing elements and the image array. The first transparent material is selected to have the necessary refractive index relative to that of the transparent base material in order to achieve the correct first focal length.

The first sub-region could be the only part of the device to display a focussing effect. However, to increase the complexity of the device, in preferred embodiments, the optical adjustment layer further comprises a second transparent material extending across a second sub-region of the array of focusing elements, the second transparent material having a refractive index different from that of the transparent base layer and different from that of the first transparent material, whereby the focussing element(s) in the second sub-region of the array have a second focal length which is different from the first and base focal lengths. The first image array could also extend across the second sub-region in which case this part of the device may display an unfocussed version of the first image array or may not display a discernible image of the first image array at all, depending on the difference between the first and second focal lengths. Preferably the difference is sufficiently large that the first image array falls outside the focal depth of the focussing elements in the second sub-region. Advantageously, a second image array is provided in at least part (preferably all) of the second sub-region of the substrate, the second image array being located in a plane spaced from that of the focussing elements by a distance substantially corresponding to the second focal length, such that the focusing elements in the second sub-region exhibit a substantially focussed image of the second image array and the focusing elements outside the second sub-region do not, the second image array preferably being located on the first surface of the substrate or on an optical spacer layer carried on the second surface of the substrate. In this way, different focussed images can be presented in the first and second sub-regions. The second image array may also be configured to co-operate with the focusing element arrays to generate an optically variable effect as discussed below.

Any number of additional transparent materials with still different refractive indices (from one another and from the transparent base material) could be provided in different sub-regions of the focussing element array. Respective image arrays may be provided at each (or some) of the respective focal lengths.

In further preferred embodiments, in addition or as an alternative to the second transparent material, the optical adjustment layer further comprises a third transparent material extending across a third sub-region of the array of focusing elements, the third transparent material having a refractive index substantially equal to that of the transparent base layer, whereby the focussing element(s) in the third sub-region of the array are nonoperative. That is, the difference in refractive index $\Delta n_m$ in the third sub-region is so small that any focusing effect is negligible since the focal length tends towards infinity. Again, such sub-regions can be used to further increase the complexity of the design.

The same considerations apply to the composition and refractive indices of the first, second and third transparent materials as discussed with respect to the first aspect of the invention.

It should be noted that whilst the first, second and third transparent materials will contact the surface relief in different laterally offset sub-regions, certain ones of the materials could extend over one or more of the others. In a preferred case, the third transparent material may extend over the first transparent material and/or, if provided, the second transparent material, contacting the surface relief only in the third sub-region. That is, the third transparent material could be applied over the first and/or second transparent materials, only contacting the surface relief where those materials are absent. In particularly preferred embodiments, the third transparent material extends across substantially the whole of the first region and more preferably the whole of the second region. Thus, the third material could comprise an all-over coating. This can also be the case in the first aspect of the invention.

However, in other cases, the optical adjustment layer could be absent across a fourth sub-region of the array of focusing elements, whereby in the fourth subregion the focussing elements are exposed to air and have the base focal length. This enables two different focal lengths to be provided at different locations across the array through the provision of just one material (the first transparent material). Preferably the device further comprises a further image array in at least part of the fourth sub-region of the substrate, the further image array being located in a plane spaced from that of the focussing elements by a distance substantially corresponding to the base focal length, such that the focusing elements in the fourth sub-region exhibit a substantially focussed image of the further image array and the focusing elements outside the fourth sub-region do not. In general, the base focal length will be shorter than the first or second focal lengths, because it is difficult to achieve a difference in refractive index $\Delta n_m$ greater than that between a transparent material and air (which has a refractive index of 1). As such the further image array will generally be arranged closer to the focusing elements than the first or second image arrays. In particularly preferred cases, the further image array is located on the first surface of the substrate. However it could alternatively be located on an optical spacer layer carried on the second surface of the substrate.

Each image array could be provided in the respective sub-region containing focussing elements of the appropriate focal length only. However, in more preferred cases, the or each image array extends across substantially all of the first region. Provided each of the image arrays which are located between the focusing element array and one or more of the other image arrays have a sufficiently low optical density, their presence typically does not conceal the underlying image array(s) significantly such that the desired optical effects are not significantly compromised.

In especially preferred embodiments, the various sub-regions (i.e. the first sub-region and the second, third and/or fourth sub-regions depending on which are provided) are arranged so as to form indicia (i.e. an item of information), preferably alphanumeric character(s), symbols(s), logo(s), graphics or the like. This indicia may be the same as any conveyed by the at least one gap in the first opacifying layer(s) or could be different. The indicia should be of a sufficient size to be distinguishable to the naked eye, such that different optical effects resulting from the different focal depths (and optionally different image arrays) are visible in the different laterally offset sub-regions.

In a further refinement, the first sub-region comprises a first array of elemental areas of the focussing element array, interspersed with one or more of a second array of elemental areas corresponding to the second sub-region, a third array of elemental areas corresponding to the third sub-region and a fourth array of elemental areas corresponding to the fourth sub-region. That is, the various sub-regions may each consist of an array of smaller elemental areas interspersed with one another, e.g. according to a regular grid arrangement. Preferably, the dimensions of the elemental areas are such that they cannot be individually resolved by the naked eye. In this way, across the portion of the device where the sub-regions are interspersed, the optical effects generated by each may appear superimposed on top of one another, giving rise to yet more complex security devices. It should be noted that visible indicia can still be formed in this way, e.g. first and second transparent materials may be interspersed with one another across a shaped portion of the device which collectively displays an indicia, and outside of which only one of the transparent materials (or no transparent material) is provided.

As in the first aspect of the invention, the complexity of the device can be increased still further by arranging the first, second and/or third transparent materials to have different optical detection characteristics from one another and/or to respectively comprise a plurality of transparent materials having different optical detection characteristics from one another, the transparent materials with different optical detection characteristics being located in respective areas of the first region laterally offset from one another. That is, the first transparent material could in fact comprise two or more first transparent materials with different optical detection characteristics (but the same refractive index) arranged in different lateral areas of the first sub-region, as could the second transparent material in the second sub-region and so on. The arrangement of areas with different optical detection characteristics may follow the demarcation between the sub-regions of different refractive indices, or may not. The different optical detection characteristics could be any of: different visible colours, different fluorescence, different luminescence or different phosphorescence, for example. Preferably, the laterally offset areas are arranged so as to form indicia (i.e. an item of information), preferably alphanumeric character(s), symbols(s), logo(s), graphics or the like. This indicia may be the same or different from any exhibited by the arrangement of sub-regions and/or from any exhibited by the opacifying layer(s).

The focussing elements can be concave or convex and the same considerations as discussed with respect to the first aspect of the invention apply. The focussing elements are again preferably lenses of any of the types mentioned previously.

Any of the image arrays mentioned can be configured to form a moire magnifier device, an integral imaging device or a lenticular device in combination with the focusing elements having the appropriate focal length to produce a focussed image of the respective image array. Where more than one image array is provided, it is preferred that those closer to the focussing element array are configured to generate a moire magnifier effect or integral imaging effect with the focussing elements since such image arrays typically have lower optical densities (e.g. fill factors) than image arrays of other types. The image array furthest from the focusing element array may be a lenticular device array since this typically has a relatively high fill factor.

The second aspect of the invention also provides a security article comprising a security device as described above, wherein the security article is preferably a security thread, strip, foil, insert or patch.

Further provided is a security document comprising a security device or a security article each as described above, wherein the security document is preferably a banknote, an identity document, a passport, a licence, a certificate, a cheque, a visa or a stamp.

The security document could be of a conventional construction, e.g. based on a paper substrate into which a security article carrying the security device is incorporated. However, the security device is particularly well suited for use on security documents based on polymer and hence, preferably, the polymer substrate constitutes the document substrate and the security document further comprises at least one first opacifying layer, comprising a non-transparent material, over the optical adjustment layer across a third region of the polymer substrate, the third region defining at least one gap in the first opacifying layer(s) which gap includes at least part, preferably all, of the first sub-region, such that a focussed image of the first image layer is exhibited through the gap. The at least one gap in the first opacifying layer(s) may include at least part of any of the second, third and fourth sub-regions, if provided, of the array of focussing elements. The at least one gap preferably defines indicia which may or may not be the same as any exhibited by the security device itself.

As described in relation to the first aspect of the invention, second opacifying layer(s) may be provided on the second surface of the substrate and can be configured to form either a full window or a half window. The opacifying layers can be formed of the materials discussed in relation to the first aspect.

The second aspect of the invention further provides a method of manufacturing a security device, comprising:

> providing a polymer substrate having first and second surfaces;
> forming an array of focussing elements as a surface relief across a first region of the polymer substrate, the surface relief being defined in the surface of a transparent base layer, wherein the transparent base layer comprises either the polymer substrate or a layer disposed thereon, the array of focussing elements being configured to have a uniform base focal length across the first region when the surface relief is in contact with air;
> applying an optical adjustment layer onto the transparent base layer across a second region of the polymer substrate, which second region includes at least a first sub-region of the array of focussing elements, the first sub-region not including the whole of the first region, the optical adjustment layer having a first surface in contact with the surface relief and an opposing second surface having a profile which is not operative to focus visible light, the optical adjustment layer comprising a first transparent material extending only across the first sub-region of the array of focussing elements, the first transparent material having a refractive index different from that of the transparent base layer, whereby the focussing element(s) in the first sub-region of the array have a first focal length which is different from the base focal length; and
> forming a first image array in at least part of the first sub-region of the substrate, the first image array being located in a plane spaced from that of the focussing elements by a distance substantially corresponding to the first focal length, such that the focusing elements in the first sub-region exhibit a substantially focussed image of the first image array and the focusing elements outside the first sub-region do not.

The focussing element array and optical adjustment layer could be formed using any of the techniques discussed with respect to the first aspect of the invention. In certain preferred embodiments, the first transparent material is applied in register with the first image array. Likewise, any second transparent material may be applied in register with a second image array. This may be particularly desirable where the image arrays are only applied in the respective sub-regions. Since the transparent materials forming the optical adjustment layer and the image array can both be applied using printing techniques, this can be performed simultaneously or at least as part of the same in-line process therefore achieving high registration accuracy. This may be particularly desirable if for instance both of the desired image arrays have a high optical density (e.g. each comprises a different lenticular array), so that only one or other of the image arrays is provided in each sub-region meaning that there is no obstruction of one by the other.

The various image arrays could be formed by printing or as grating structures, recesses or other relief patterns. The term printing here encompasses standard printing techniques such as gravure printing, flexographic or lithographic printing, and also specialised high-resolution techniques such as those disclosed in WO-A-2014/070079, US-A-2009/0297805, WO-A-2011/102800, WO-A-2005/052650, WO-A-2015/044671, or our British patent application no. 1510073.8.

The security substrates and devices of both aspects of the present invention can optionally be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

The method can be adapted to provide the security device with the any of the optional features described above.

Examples of security devices, security substrates and methods of manufacture thereof will now be described with reference to the accompanying drawings, in which:

> Figure 1 shows an exemplary security document in accordance with embodiments of the first and/or second aspects of the invention, in plan view;
> Figure 2 shows a portion of an exemplary security document in accordance with an embodiment of the first aspect of the invention, (a) in plan view and (b) in cross-section;
> Figure 3 shows a portion of an exemplary security document in accordance with an embodiment of the second aspect of the invention, (a) in plan view and (b) in cross-section;
> Figure 4 shows a portion of an exemplary security document in accordance with an embodiment of the second aspect of the invention, (a) in plan view and (b) in cross-section;
> Figure 5 shows a portion of an exemplary security document in accordance with an embodiment of the first and second aspects of the invention, (a) in plan view and (b) in cross-section;
> Figure 6 shows a portion of an exemplary security document in accordance with an embodiment of the first and second aspects of the invention, (a) in plan view and (b) in cross-section;
> Figure 7 shows a portion of an exemplary security document in accordance with an embodiment of the second aspect of the invention, (a) in plan view and (b) in cross-section;

Figure 8 shows a portion of an exemplary security document in accordance with an embodiment of the second aspect of the invention, (a) in plan view and (b) in cross-section;

Figure 9 shows a portion of an exemplary security document in accordance with an embodiment of the first aspect of the invention, (a) in plan view and (b) in cross-section;

Figure 10 shows a portion of an exemplary security document in accordance with an embodiment of the second aspect of the invention, (a) in plan view and (b) in cross-section;

Figure 11 shows a portion of an exemplary security document in accordance with an embodiment of the first and second aspects of the invention, (a) in plan view and (b) in cross-section;

Figure 12 schematically depicts selected components of a security device suitable for use in embodiments of the first and/or second aspects of the invention, (a) in perspective view and (b) in cross-section, Figures 12(c)(i) and (ii) showing two exemplary images exhibited by the security device at different viewing angles;

Figure 13 schematically depicts selected components of a security device suitable for use in embodiments of the first and/or second aspects of the invention in plan view; and

Figures 14 A to J depict different examples of image elements as may be employed in in embodiments of the first and/or second aspects of the invention.

The description below will focus in the main part on deployment of the disclosed security devices in security documents based on polymer document substrates, such as polymer banknotes, since the devices are particularly well suited to this application. Security documents are examples of security substrates and as discussed below it will be appreciated that the disclosed structures could instead be provided on polymer substrates forming security articles such as threads, strips or patches which can then be applied to any form of security document, including polymer-based documents but also conventional documents such as paper-based documents.

Consequentially, in the examples described below, the masking layer referred to above in connection with the first aspect of the invention is implemented as an opacifying layer. However, in other cases this may be replaced by a masking layer of another composition, such as a metal layer, a semi-transparent metal layer, metallic ink layer, iridescent ink layer or any of the other materials mentioned previously. In general, the masking layer preferably takes the form of a non-fibrous material, and may comprise multiple layers of such materials (which may or may not be the same in each layer). The masking layer(s) are preferably printed or coated layer(s) and are typically not self-supporting (that is, they are supported by the underlying substrate).

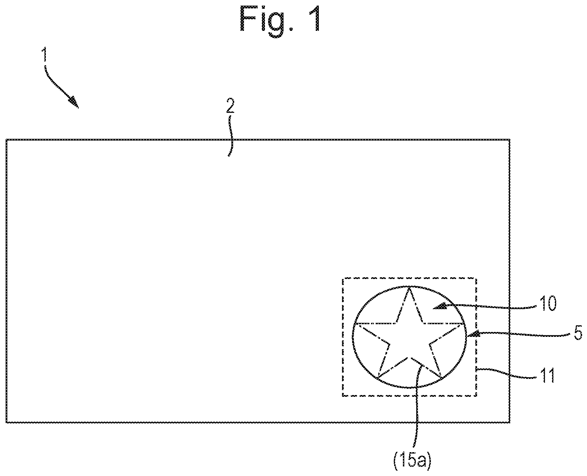

Figure 1 shows an exemplary security document 1, such as a bank note, in plan view. The majority of the surface of the document 1 is covered by one or more opacifying layers 2 which are typically printed, e.g. with security patterns, graphics, currency and denomination information and the like (not shown). The opacifying layer(s) are non-transparent and preferably light in colour, e.g. comprising a white, off-white or grey pigment such as titanium oxide dispersed in a binder. The opacifying layers are omitted across at least one gap 5 to form a window as discussed further below. The window 5 preferably takes the form of indicia, i.e. an item of information, which here is a circle but could be an alphanumeric character, a symbol, or a graphic etc. A security device 10 is arranged in the region of the window 5. The security device 10 comprises an array of focussing element 11 of which the perimeter is shown in dashed lines. In preferred embodiments, the opacifying layer 2 overlaps at least some of the array of focussing elements 11 although this is not essential in all cases. Inside the window 5, an optically variable effect will be exhibited by the security device due to the focussing effect of the focussing elements, at least across a sub-region 15a, the perimeter of which may or may not be visible in the window 5 as explained below. In the example shown, the perimeter of the sub-region 15a has the form of an indicia, here a star, but any other indicia could be chosen. The manner in which such indicia are formed will be explained below.

The focussing elements could be lenses or mirrors, e.g. cylindrical, spherical, aspherical, elliptical or Fresnel structures. In the examples described below the focussing elements are lenses and hence the focussing element array may be referred to as a lens array for convenience. However it will be appreciated that the lenses could be substituted by other types of focussing elements.

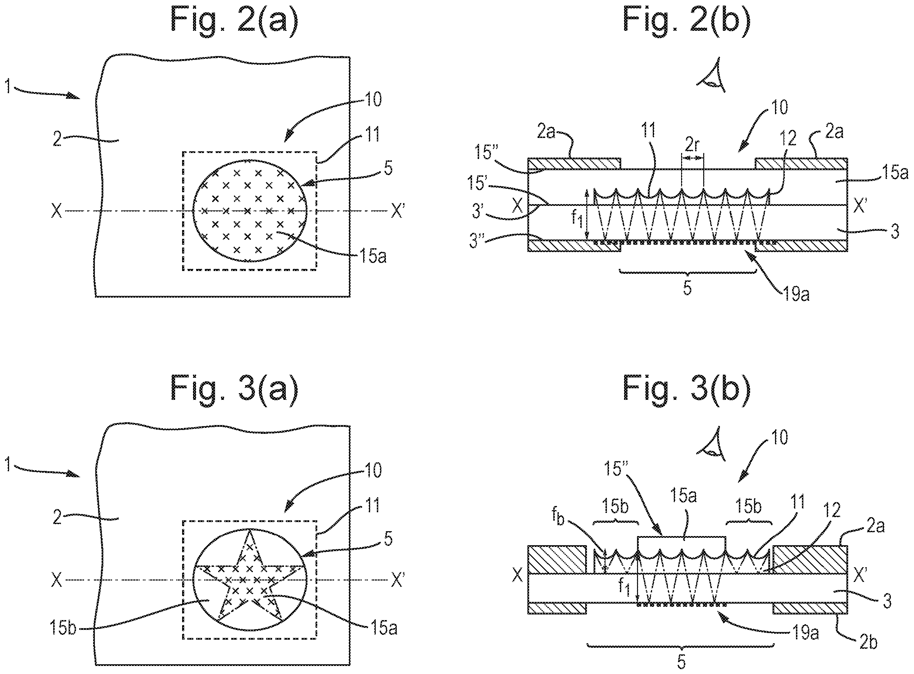

Figure 2 shows an embodiment of the invention (a) in plan view and (b) in cross section along the line X-X'. Only a portion of the security document 1 is depicted. It should be noted that the cross-section is not to scale (this applies to all Figures). Reference numbers already introduced in relation to Figure 1 are used for the same components here and throughout the description below. In this example, the whole area of the security device 10 revealed by window 5 in the opacifying layer 2 exhibits a first focussed image, represented by an array of crosses. This focussed image is preferably optically variable, e.g. being a lenticular effect, a moire magnification effect or an integral imaging effect as discussed below.

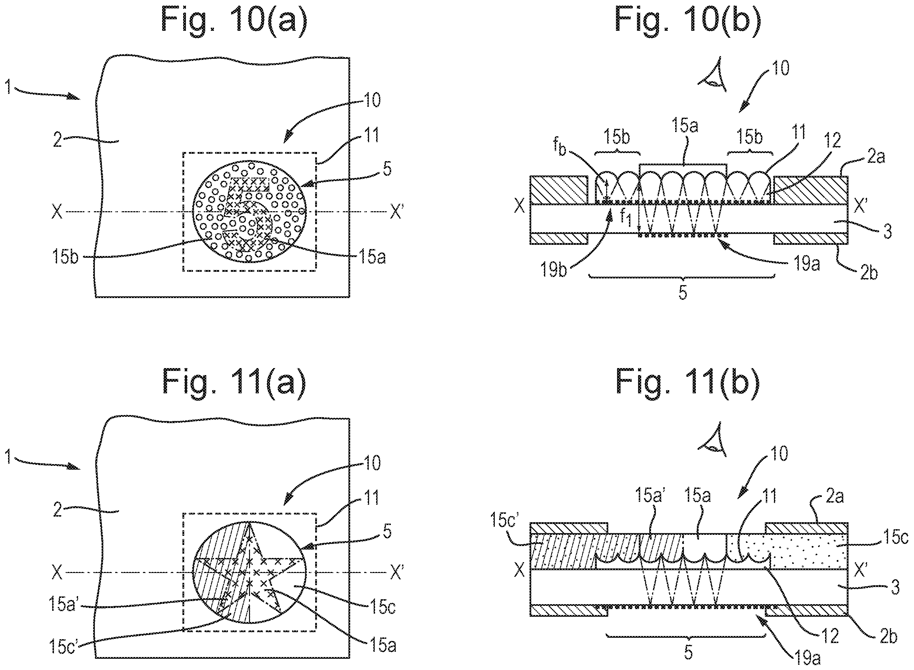

As shown in Figure 2(b), the lens array 11 is formed as a surface relief in a transparent base material 12, which in this case is a layer, e.g. of curable resin, disposed on the first surface 3' of a polymer substrate 3 which here is transparent. The polymer substrate 3 can be monolithic or multi-layered and in preferred examples is formed of a thermoplastic such as polypropylene (PP) (most preferably bi-axially oriented PP (BOPP)), polyethylene terephthalate (PET), polyethylene (PE), polycarbonate (PC), polyvinyl chloride (PVC), nylon, acrylic, Cyclic Olefin Polymer (COP) or Cyclic Olefin Copolymer (COC), or any combination thereof. For banknote applications, the polymer substrate typically has a thickness in the region of 70 microns but should the device be formed on a polymer substrate for use as a thread, strip or other article this will be thinner (e.g. 30 microns). Where the security document is a card such as a bank card or ID card, the polymer substrate could be thicker, e.g. 150 microns or more. The layer 12 may be applied directly onto the first surface 3' of the polymer substrate 3 or one or more intermediate layers such as a primer may exist therebetween (not shown). The surface relief 11 can be formed in the surface of the transparent base material 12 by cast-curing, for example. In this case, the material 12 is applied to the polymer substrate 3 over the required area in the form of a curable fluid resin which is then brought into contact with an appropriately-shaped die and cured by exposure to heat and/or radiation such as UV. The surface relief 11 is shaped such that the lenses function as focusing elements when the surface relief is exposed to air, i.e. they focus light transmitted therethrough to a point with a focal length (the "base focal length", $f_B$) less than infinity. The lenses are preferably uniform in shape, size (and hence focal length, in the absence of any additional measures) across the array 11. In this example, the lenses are concave lenses (i.e. formed as depressions into the surface of layer 12), although convex lenses can alternatively be used in all embodiments as discussed below in relation to Figure 10.

The lens array 11 is covered by an optical adjustment layer which here comprises a first transparent material 15a disposed across the whole of the lens array 11 and beyond. In some implementations it is preferred that the optical adjustment layer covers at least the whole lens array in order to present an outer surface 15" which is smooth relative to the lens array, ideally planar, such that first opacifying layer(s) 2a can be applied thereto more readily. Most preferably the optical adjustment layer covers a region extending beyond the lens array 11, as shown, and advantageously across substantially the whole polymer substrate 3 in order to level the outer surface for application of opacifying layer(s) 2a.

The first transparent material 15a has a refractive index n which is different from that of the transparent base material 12, preferably by at least 0.1, more preferably at least 0.15, most preferably at least 0.2. In this case, since the lenses 11 are concave lenses, in order to achieve focussing in the correct direction, the first transparent material 15a will have a refractive index higher than that of the transparent base material 12. Preferably, the transparent base material 12 is a low refractive index (LRI) material having a refractive index of 1.45 or less. Examples of suitable materials will be given below. The first transparent material 15a is preferably a high refractive index (HRI) material having a refractive index of 1.55 or more. The difference in refractive index Δn between the transparent base material 12 and the first transparent material 15a preserves the focussing nature of the interface between the two materials at which the surface relief defining the lenses 11 is located. Hence in this case, all of the lenses 11 remain functional after application of the first transparent layer 15a.

The first surface 15' of the optical adjustment layer contacts the surface relief where it is present, and contacts the polymer substrate 3 elsewhere. The second surface 15" of the optical adjustment layer is preferably substantially planar (i.e. flat) but if any profile is present it will be non-focussing. Thus, the second surface 15" of the optical adjustment layer does not contribute to the optical effect as a result of its shaping. In preferred embodiments, the second surface of the optical adjustment layer may be smoothed, e.g. by polishing or calendaring, after application of the layer by printing, coating or another suitable method.

The focal length $f_1$ of the lenses 11 where the first transparent material 15a makes contact with the surface relief (all over, in this case) will be different from their focal length in air (the base focal length, $f_B$). The focal length depends on the difference in refractive index between the first transparent material 15a and the transparent base material 12, according to the expression:

$$f \propto \frac{r}{(n_B - n_1)} = \frac{r}{\Delta n_1}$$

where r is the radius of the focussing elements, $n_B$ is the refractive index of the transparent base material 12, $n_1$ is the refractive index of the first transparent material 15a, and $\Delta n_1$ is the refractive index difference between them. In air, the refractive index difference will generally be around 0.5, whereas the refractive index difference between the transparent base material 12 and a first transparent material 15a will typically be less, e.g. around 0.15, so the focal length $f_1$ will usually be longer than the base focal length $f_B$.

In this example, therefore, the whole of the lens array 11 is functional and can display a focussed image if an image is placed at the appropriate focal length. However, the lateral extent over which the focussed image is visible is in this case determined by the arrangement of the opacifying layer(s) 2a applied over the optical adjustment layer. In the present case, the gap 5 in the opacifying layer(s) 2a is shaped and sized so as to reveal only some and not all of the functional lenses 11. That is, some of the functional lenses are concealed under the opacifying layer 2a (at least in reflected light). As such, the lateral perimeter of the optical effect displayed by the lenses is determined solely by the extent of the opacifying layer 2a. This can be adapted such that the gap 5 has the form of any indicia, here a circle, which allows the complexity of the visual effect to be increased and also permits incorporation of the device into the rest of the banknote design more readily. Since the opacifying layers 2(a) can be applied onto a substantially flat surface 15" this enables the use of many application techniques, such as gravure printing, without encountering difficulties which would otherwise be caused by the uneven surface presented by lens array 11.

The second surface 3" of the polymer substrate is preferably provided with further opacifying layers 2b, which may correspond in extent to opacifying layers 2a (in which case the window 5 is a full window), or may continue across all or part of the gap(s) defined in opacifying layer 2a, resulting in a half window as discussed below.

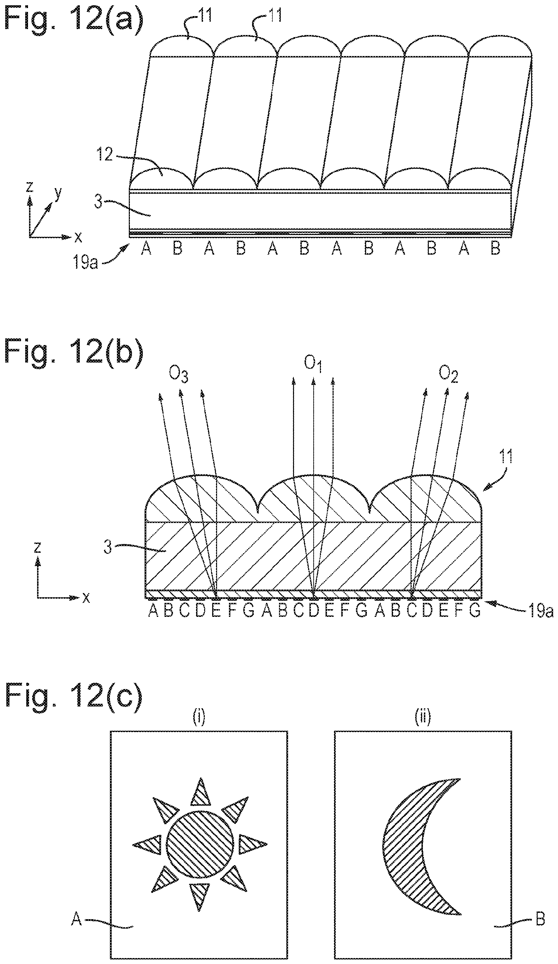

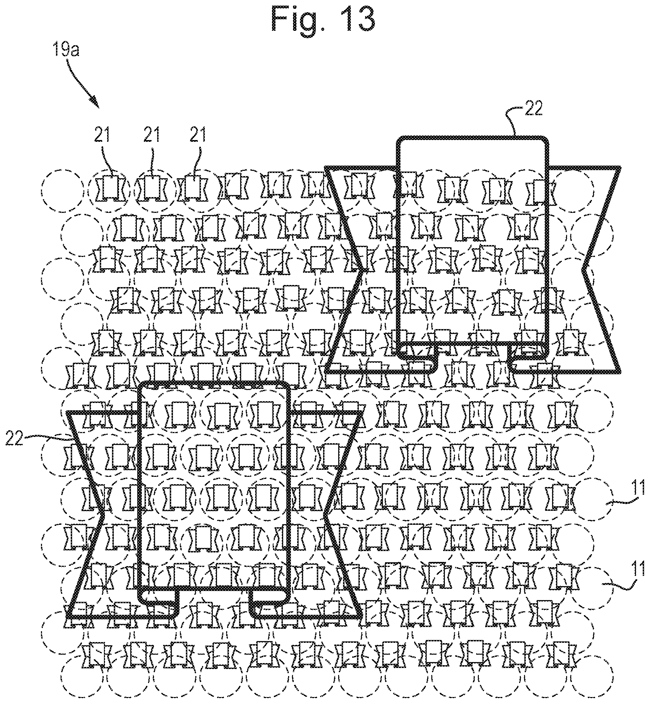

The lenses 11 by themselves provide a security effect that cannot be replicated e.g. by photocopying the device. For instance, the lenses 11 could be used to view any scene therethrough or held against a suitable surface to view an item thereon. However, in most preferred embodiments, the security device 10 further includes an image array 19a located in a plane spaced from the lenses 11 by a distance substantially corresponding to the focal length $f_1$ of the lenses (e.g. to within +/- 5%) so that the lenses 11 display a focused image of the image array 19a to an observer viewing the image array 19a through the lenses 11. The image array may preferably be configured to co-operate with the lenses 11 to form an optically variable effect, e.g. such that the resulting device is a moire magnifier, an integral imaging device or a lenticular device (or some combination thereof as discussed below). Examples of such devices will be described with reference to Figures 12 and 13.

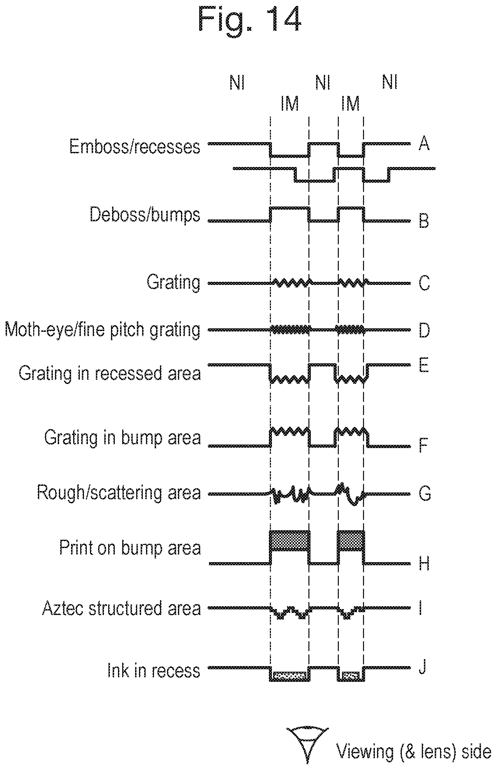

In this example, the focal length $f_1$ is substantially equal to the distance between the lenses 11 and the second surface 3" of the polymer substrate, as is preferred. This can be achieved through appropriate choice of the lens dimensions, the refractive indices of the transparent base material 12 and the first transparent material 15a, and of the thicknesses of the transparent base material 12 (if provided as an additional layer) and the polymer substrate 3. If necessary an additional optical spacing layer can be provided on the second surface 3" of the polymer substrate to carry the image array as discussed below. The image array 19a can be formed by various methods, including printing techniques such as gravure, lithographic or flexographic printing. However, in order to achieve good results, the elements forming the image array 19a typically need to be formed at high resolution, e.g. with dimensions of 20 microns or less, preferably 10 microns or less, most preferably 5 microns or less. Some specialist methods adapted to achieve such high resolutions are disclosed in WO-A-2014/070079, US-A-2009/0297805, WO-A-2011/102800 WO-A-2005/052650, WO-A-2015/044671, or our British patent application no. 1510073.8, and are preferred for use here. The image array can alternatively be formed as an array of recesses as will be discussed with reference to Figure 14 below. The image array can be formed directly on the second surface 3" of polymer substrate 3 or could be formed on a separate carrier and then applied (e.g.

laminated) to the polymer substrate 3.

Figure 3 shows another embodiment of a security document 1 equipped with a security device 10. Components already discussed above are labelled with like reference numbers and will not be described in detail again, except where differences arise. This applies equally to all subsequent embodiments.

In contrast to the previous example, in the Figure 3 embodiment, the optical adjustment layer does not extend over the full area of the lens array 11 but instead the first transparent material 15a is provided over only a first sub-region of the lens array 11, which excludes some of the lenses. Thus, whilst the upper surface 15" of the optical adjustment layer is still preferably planar (and does not contribute to any focussing effect) since this only covers a portion of the surface relief, the same benefits discussed in relation to Figure 2 of achieving a level surface on which to apply the opacifying layers 2a are not achieved in this case. As such, it may be preferable to apply the opacifying layers 2a only outside the lens array 11, although they could be disposed over part of the lens array 11 if a suitable technique is adopted (e.g. spraying of the opacifying layers 2a).

The first transparent material 15a again has a refractive index different from that of the transparent base material 12 such that where it is applied (the "first sub-region"), the lenses remain operative and have a focal length $f_1$. Outside the first sub-region, in the sub-regions labelled 15b, the optical adjustment layer is absent and the surface relief remains exposed to air. Hence, in the sub-regions 15b, the lenses have the base focal length $f_B$ which as discussed above is typically shorter than the first focal length $f_1$ (in Figure 3, the base focal length is indicated as being equal to the distance between the lenses and the first surface of the polymer substrate, but this is not essential here). As a result, the optical effect exhibited in the sub-regions 15b will be different from that in the first sub-region 15a. In particular, the sub-regions 15b will not exhibit a focussed image of image array 19a. In the example shown, image array is provided only in the first sub-region 15a. However, even if the image array 19a extends partially into or fully across the sub-regions 15b, it still will not be imaged by the lenses 11 in those sub-regions since they are not focussed on it. This allows the first image array 19a to be applied without the need for high registration between it and the sub-region defined by the presence of first transparent material 15a, or indeed all over the polymer substrate 3. The resulting security device will display the focussed image of image array 19a only in sub-region 15a, which preferably defines indicia by its lateral extend. In this case this takes the form of a star but any other indicia such as alphanumeric characters, symbols, currency identifiers, logos etc could be formed instead though the selective application of first transparent material 15a. Preferably a selective application technique such as printing, e.g. gravure printing, lithographic printing, flexographic printing, offset printing or screen printing is used to apply the first transparent material. As before its second surface may be calendared or polished to improve its flatness.

Outside the first sub-region 15a, in the sub-regions 15b the device 10 may exhibit no focussed image. For example, in the Figure 3 embodiment, the base focal length $f_B$ coincides with the first surface of the polymer substrate 3 which does not carry any image and hence no focussed image will be generated by the lenses.

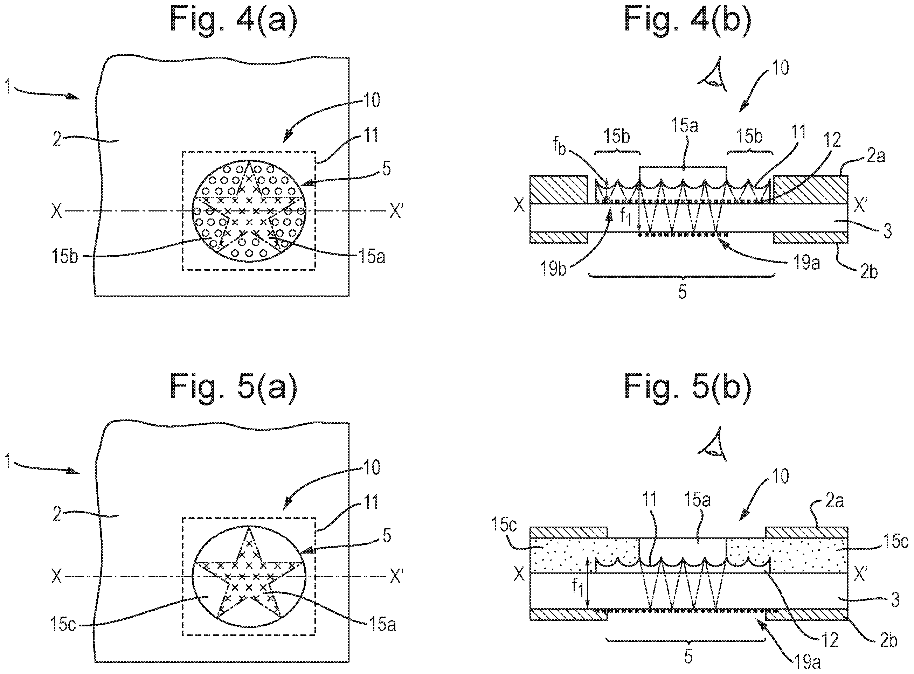

Figure 4 shows a variant of the Figure 3 embodiment in which the optical effect of the device is enhanced by providing a second image array 19b on the first surface of the polymer substrate 3, i.e. spaced from the lenses 11 by the base focal length $f_B$. As such, the lenses 11 in the sub-regions 15b now exhibit a focussed image of the second image array 19b. The optical effects in each of the sub-regions 15a and 15b are different, as indicated by the array of crosses shown in sub-region 15a and by the array of circles in sub-region 15b of Figure 4(a). This can be achieved in a variety of ways. In some cases the first and second image arrays 19a, 19b are different from one another. For example, one could generate (in combination with the lens array 11) a moire magnification effect whilst the other a lenticular effect. Alternatively both could define effects operating on the same mechanism as one another but with different images, e.g. the first array 19a could carry an array of microimages exhibiting the digit "10" whilst the second array carries an array of microimages exhibiting the symbol "£". The two arrays 19a, 19b could also be formed using different techniques and/or in different colours from one another. If both of the image arrays 19a, 19b generate moire magnification or integral imaging devices with the lens array 11, the apparent image planes in which the respective magnified images will appear to sit will be on different levels from one another, because the depth (or height) of such an image plane is proportional to (f x m), where f is the focal length and m is the magnification factor. Therefore, the image arrays 19a, 19b could be the same as one another since this will still result in different optical effects in the two sub-regions 15a, 15b. For example, in one sub-region the magnified image may appear to float in front on the device and in the other it may appear to be sunken behind the device.

The image array 19b could be formed on the first surface 3' of the polymer substrate 3 prior to application of the transparent base layer 12 and formation of the lenses 11, e.g. by cast-curing as discussed above. Alternatively the lenses 11 could be formed on a base transparent material in the form of a carrier layer on a separate component such as a patch or stripe, and then laminated onto the first surface of the polymer substrate 3. In this case it may be convenient to form the image array 19b onto the underneath surface of the separate component carrying the lenses before it is applied to the polymer substrate 3.

In this example, the second image array 19b is depicted as extending across the first sub-region 15a in addition to the sub-regions 15b, although it could be provided in the sub-regions 15b only. Provided the second image array 19b is of sufficiently low optical density, this will not significantly obstruct the view of image array 19a in the first sub-region 15a since the lenses here do not focus on the second image array 19b. Image arrays of the sort used to generate moire magnification effects or integral imaging effects are preferred for use as the second image array in this case, since they typically have a low fill factor (and hence low optical density) compared to lenticular device image arrays. Thus, in a preferred example, the second image array 19b may define a moire magnification or integral imaging effect whilst the first image array 19a may define a lenticular effect (since it is the image array furthest from the lenses 11, there is no further image array for it to obstruct).

The constructions shown in Figures 3 and 4 does have the disadvantage that some of the lenses 11 are left exposed during handling, which leaves them susceptible to soiling and damage. In addition, since the transparent base layer 12 will be formed of a material with a lower refractive index than the first transparent material 15a (since the lenses are concave, as discussed above), this may be of relatively low density and hence less robust.

Figure 5 shows an alternative embodiment which does not result in such problems. In this case, the optical adjustment layer comprises two transparent materials 15a and 15c, contacting different laterally offset sub-regions of the lens array 11. Thus, the optical adjustment layer as a whole covers the whole of the lens array and preferably extends beyond it thereby presenting a level surface for the application of opacifying layers 2(a) in the manner described with reference to Figure 2. However, in this example the extent of the focussed optical effect is not determined solely by the arrangement of the opacifying layers 2a, but rather by the application of the first transparent material 15a as described in relation to Figures 3 and 4. In variants, the final area over which the optical effect is visible could be defined in part by the extent of the first transparent material 15a and in part by the arrangement of the opacifying layer 2a, e.g. if the opacifying layer 2a extends over part of first transparent material 15a but some of its perimeter remains visible.

Outside the first sub-region 15a, the optical adjustment layer comprises a transparent material 15c with a refractive index substantially equal to that of the transparent base layer 12, e.g. with a difference of 0.1 or less. For instance, the transparent material 15c could be of the same composition as the transparent base layer 12 although this is not essential. Thus the lenses 11 in the sub-regions 15c are "indexed-out", with the interface between the transparent base material and the transparent material 15c no longer operating as a focussing surface, or one with a very long focal length (tending to infinity as the difference in refractive index tends to zero). As a result, no focussed image is exhibited in the sub-region 15c.

In a variant of the Figure 5 embodiment, the transparent material 15c could be applied over the first transparent material 15a, still contacting the surface relief 11 only in the sub-regions 15c. The transparent material 15c could also be applied after the opacifying layer 2a, e.g. extending across all or part of the opacifying layers and across the window region 5, potentially across the whole area of the security document as an over-varnish. This removes the benefit of the optical adjustment layer providing a level surface for application of the opacifying layers, but the finished optical appearance will be the same as described.

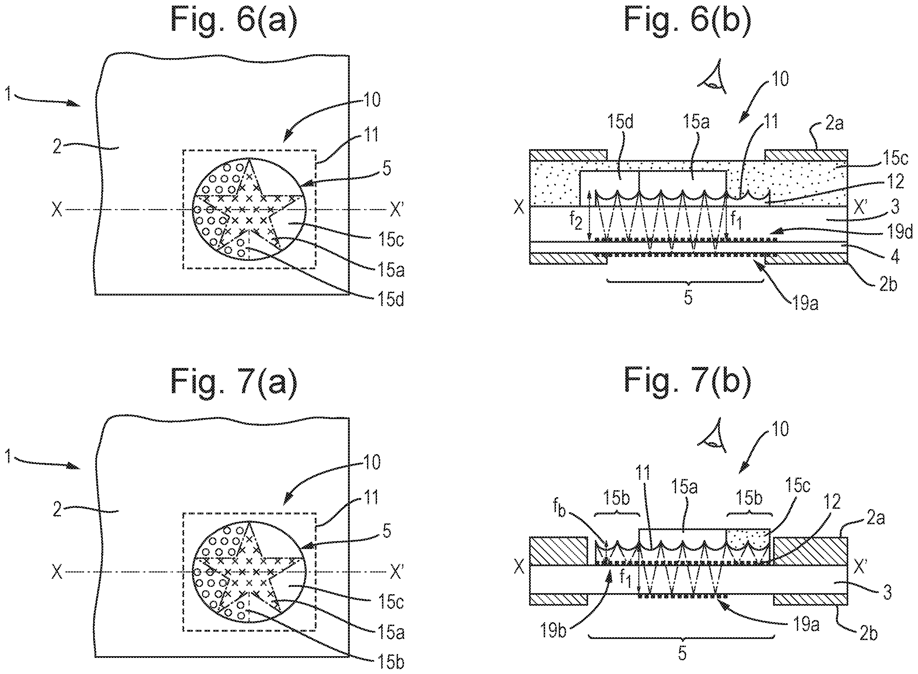

Figure 6 shows a further embodiment in which the complexity of the device can be increased still further by providing the optical adjustment layer with another transparent material 15d. In this example, the optical adjustment layer includes all three materials 15a, 15c and 15d but in other cases it could include only materials 15a and 15d, depending on the desired effects. The transparent material 15d, like the first transparent material 15a, has a refractive index different from that of the transparent base layer 12 so the focusing function of the lenses in the sub-region 15d is preserved. However, the transparent material 15d has a different refractive index from that of the first transparent material 15a so the focal length $f_2$ of the lenses in the sub-region 15d is different from the focal length $f_1$ of the lenses in the sub-region 15a. Preferably, an additional image array 19d is provided at the focal length $f_2$ so that a focussed image of the image array 19d is exhibited in the sub-region 15d. The image array 19d could be confined to sub-region 15d or may extend outside it, e.g. across the whole lens array as shown. The same considerations as discussed with respect to the image arrays 19a, 19b in Figure 4 apply equally to the image arrays 19a, 19d in Figure 6 and again they are desirably configured to give rise to different optical effects in each respective sub-region 15a, 15d. Both image arrays may be provided on the second surface of the substrate 3", e.g. by locating one image array directly on that second surface (here, image array 19d), and the other on an optical spacing layer 4 applied to that second surface, in order to locate the two image arrays at the different respective focal lengths $f_1$, $f_2$.

In this example, another sub-region 15c of the lens array 11 is coated with index-matching transparent material 15c so the lenses here are non-functional as described in relation to Figure 5. Hence in this sub-region no focussed image of either image array will be exhibited. The result is a complex arrangement of different optical effects as illustrated in Figure 6(a). The transparent material 15c can be applied only to the sub-regions in which it is required to contact the surface relief, or can be applied all over, as shown. As mentioned in relation to Figure 5, it could be applied over the top of the opacifying layers 2a.

Any number of further transparent materials with different refractive indices (which are also different from that of the transparent base layer) could be arranged in respective sub-regions to provide additional different focal lengths if desired. A corresponding number of image arrays in the appropriate focal planes may also be formed.

Figure 7 shows a further embodiment in which the optical adjustment layer does not extend over the whole of the lens array 11, but leaves a sub-region 15b of the lenses exposed to air, as in the Figure 4 embodiment. The other sub-regions of the array are coated with first transparent material 15a and index-matching transparent material 15c, respectively. Thus, in the first sub-region 15a, the lenses are operative and have focal length $f_1$, generating a focussed image of image array 19a. In the sub-regions 15b, the lenses are operative with the base focal length $f_B$ and generate a focussed image of image array 19b. In the sub-region 15c, the lenses are non-functional and do not display any focussed image.

The same considerations as to the nature of image arrays 19a, 19b apply as discussed above in relation to Figure 4.

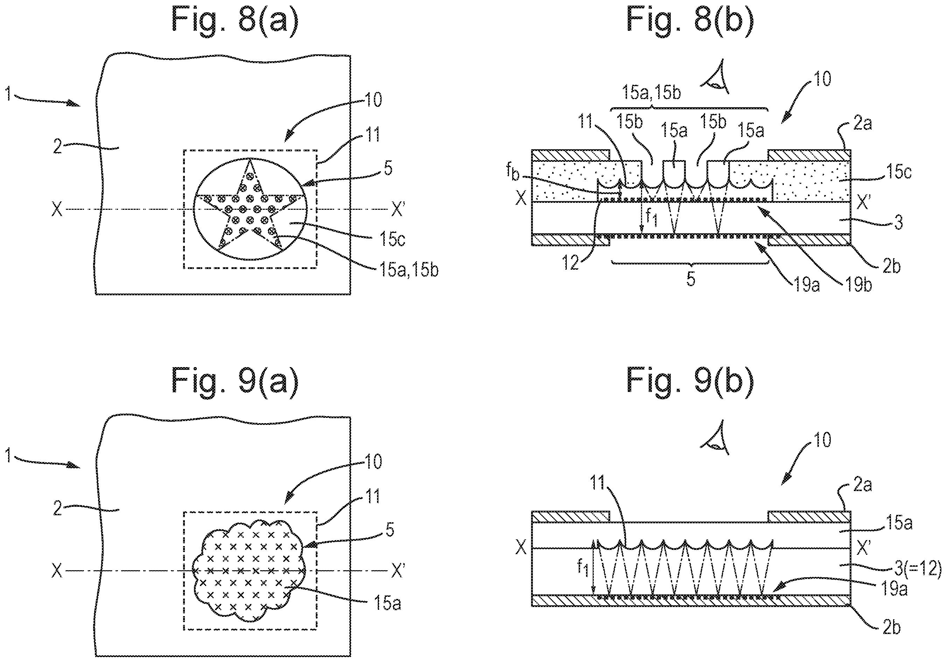

In all of the above embodiments, the different optical effects generated by the lenses in each distinct sub-region of the device are arranged in laterally offset areas which are distinguishable from one another by the naked eye, by virtue of their size. This enables the various different optical effects to define indicia through the shape, size and location of their peripheries. However, the principles described above can also be utilised to achieve the superposition of different optical effects, as illustrated in Figure 8. Here, the optical adjustment layer comprises an index-matching transparent material 15c (which is optional) located outside a star-shaped sub-region labelled 15a,b inside which elemental areas of the first transparent material 15a are arrayed with elemental areas 15b in which the optical adjustment layer is absent (i.e. the lenses are exposed to the air). The elemental areas 15a, 15b are arranged periodically across the area 15a,b, e.g. on a regular one or two dimensional grid, preferably as line or dot patterns. The elemental areas 15a, 15b have such small dimensions that they are not individually resolvable to the naked eye. For example, each elemental area 15a may have dimensions (e.g. line width) of 300 microns or less. It should be noted that whilst the Figure illustrates each elemental area 15a, 15b as corresponding to one lens, this will generally not be the case in practice (usually a plurality of lenses will fall inside each elemental area) and indeed no registration between the lens surface relief and the elemental areas 15a, 15b is required (although could be desirable in some cases).

In the elemental areas where the first transparent material 15a is present, the lenses have the first focal length $f_1$ and generate a focussed image of image array 19a. In the elemental areas 15b where the lenses are exposed to the air, the lenses have the base focal length $f_B$ and generate a focussed image of image array 19b. Since the different elemental areas, and hence the focussed images exhibited by each, cannot be distinguished by the naked eye, the two optical effects appear superimposed on one another across the star-shaped region 15a,b. Outside that region, the lenses are indexed-out by material 15c and no focussed image is visible.

The same considerations as to the nature of image arrays 19a, 19b apply as discussed above in relation to Figure 4. For example, image array 19b may comprise a microimage array suitable for generating a moire magnification effect. Image array 19a could comprise a lenticular array of interleaved images, e.g. of two different solid colours. Hence the star-shaped region may display moire-magnified versions of the microimages against a uniform background, the colour of which will depend on the viewing angle and will switch as the device is tilted.

In a variant, the regions 15b could be filled-in with a second transparent material 15d with a refractive index different from that of the transparent base layer 12 and from the first transparent material 15a, as described with respect to Figure 6. The locations of the first and second image arrays 19a, b may be repositioned accordingly. This will help to protect the lens structure and reduce soiling.

In some cases it may be desirable to register the application of the elemental areas 15a, 15b (or 15d) to the image arrays 19a, 19b. For example, if it is desired to superimpose two effects requiring image arrays of high optical density it may be necessary to confine each image array to the elemental areas in which it will be focussed. Since the transparent material(s) defining the optical adjustment layer and the image arrays can both be applied by printing, high register between them is achievable, e.g. by applying both simultaneously or at least as part of the same in-line process.

In all of the above embodiments, the focussing elements 11 have been formed in a layer 12 applied to the first surface of the polymer substrate 3, e.g. by cast-curing or lamination. However the focussing elements 11 can alternatively be formed in the first surface of the polymer substrate 3 itself, in which case this constitutes the transparent base material 12. An example is shown in Figure 9. The surface relief defining the lenses 11 can be formed for instance by embossing into polymer substrate 3. This has the advantage that the overall thickness of the structure can be reduced and it is also more flexible due to the nature of the thermoplastic substrate 3. In the embodiment depicted, the optical adjustment layer is formed of a single first transparent material 15a all over the polymer substrate, as described with reference to Figure 1, but this is not essential and embossed lenses such as those shown in Figure 9 could be used in any of the other embodiments described above.

Figure 9 also shows an alternative implementation of the opacifying layers 2a, 2b which could be employed in any embodiment. In this example, the first opacifying layers 2a define a gap 5 in the shape of a cloud indicia whilst the second opacifying layers 2b extend across the whole of gap 5. As a result the window formed is not transparent, but is nonetheless of lower optical density than surrounding portions of the document 1. This is referred to as a half-window. In still further variants, the second opacifying layer could define a gap which only partially overlaps that in opacifying layer 2a. This results in some half-window areas and some full-window areas. In general, all of the embodiments could be configured as full-windows, half-windows or some combination of the two. The security devices could also be applied to non-windowed regions of a substrate, e.g. if formed on a polymer substrate such as a thread or patch substrate which is then applied over a non-window region of a document.

In the embodiments so far, the focusing elements have been implemented as concave lenses which have a number of advantages in the disclosed overcoated system. However, the lenses could alternatively be convex lenses, i.e. formed as protrusions extending away from the body of the transparent base layer 12. This applies to all of the above examples and a further embodiment is shown in Figure 10. This embodiment corresponds in all other respects to that of Figure 4 above, except here the first region 15a has the form of a digit "5". Since the exposed lenses in regions 15b are convex, they are less susceptible to soiling than the concave lenses used previously. Also, the transparent base layer will need to be of a higher refractive index than the first transparent material 15a meaning that it will be more robust than in the Figure 4 embodiment and hence the exposed lenses less prone to damage. However, the first transparent material will now need to be of lower refractive index and hence may now be less robust and more easily damaged. To mitigate this problem, it is preferable that the transparent base layer 12 is formed of a very high refractive index material (e.g. at least 1.6) and the first transparent layer 15a is formed of a moderate refractive index material (e.g. 1.5 or less) which is still relatively robust.

The appearance and complexity of any of the embodiments can be yet further enhanced by arranging the or each material 15a, 15c, 15d (or some of them) forming part of the optical adjustment layer to have a optically detectable characteristic such as a visibly coloured tint, or a property such as fluorescence, phosphorescence, luminescence or the like which may be exhibited in response to certain stimuli (e.g. non-visible wavelength illumination such as UV) and emit a response which may be visible or non-visible. Thus the characteristic may be detectable by machine only, e.g. IR absorption. The various materials 15a, 15c, 15d may carry different optically detectable characteristics, e.g. colour, to further emphasise the different sub-regions already described above. Alternatively or in addition, any one of the materials 15a, 15c, 15d could be made up of more than one material with the same refractive index but different optically detectable characteristics e.g. colour. In this way, the different colours or other characteristics of the materials can be used to introduce yet further indicia or patterns to the device which are not constrained to the arrangement of the different optical effects already described.

Figure 11 shows an example of this which corresponds broadly to the embodiment shown in Figure 5 above. Thus, the star-shaped region exhibits a focussed image of image array 19a and the outer areas do not, since here the lenses are indexed-out. However, in this case both sub-regions are each formed of two different transparent materials. Hence, the left half of the star-shaped sub-region is formed of material 15a' whilst the right half comprises material 15a which has the same refractive index as material 15a' but a different optical characteristic, e.g. colour. For instance, the left half of the star may carry a blue tint whilst the right half is colourless. Similarly, the left half of the sub-regions which are indexed-out carry a material 15c' of substantially equal refractive index to that of the transparent base layer 12, and the right half carries a different material 15c of the same refractive index but different optical characteristic e.g. colour. In this case, the material 15c' carries the same optical characteristic as the material 15a' so that the whole left hand side of the circular area defined by gap 5 appears blue. In other cases the material 15c' could be another colour again, e.g. red.

The transparent base layer 12 could also carry a detectable optical characteristic e.g. coloured tint or fluorescence, phosphorescence or luminescence if desired.

Examples of suitable materials for forming the transparent base layer 12 or the first or second transparent materials 15a, 15d will now be provided. In each case the transparent material 15a, 15d could be formed of just one of the material components indicated below, but more usually will comprise a mixture (co-polymer or blend) of two or more of the components listed, in order to achieve not only the required optical properties but also desirable mechanical properties. The "high refractive index" materials listed below have a refractive index of about 1.55 or more, and the "low refractive index" materials about 1.45 or less. Where available, the approximately refractive index (RI) of each component is indicated below. One or both of the materials 15a, 15d could optionally also comprise a curable component and examples of these are provided below. It will be appreciated that whether the high RI or low RI material is deployed as the transparent base layer 12 or the first or second transparent materials 15a, 15d will depend on whether the lenses are convex or concave.

Examples of high refractive index components -

Metal containing acrylates:

zirconium acrylate (Sigma Aldrich Cat. No. 686239)
hafnium acrylate (Sigma Aldrich Cat. No. R686212)
zirconium carboxyethyl acrylate (Sigma Aldrich Cat. No. 686247)
hafnium carboxyethyl acrylate (Sigma Aldrich Cat. No. 686220)

Fluorene acrylates based monomers-

(Miramer is a trade name of Miwon Chemicals, Korea)-
Miramer HR6040
Miramer HR6042
Miramer HR6060
Miramer HR6100

High RI Nano particulate dispersions -

Unidic EPC-1027 (DIC Corporation, Japan)
SHR 1075 (Miwon Chemicals, Korea)

Sulfur containing acrylate-

Phenylthioethyl acrylate, (Dichem Korea) - RI 1.560
1-naphthylthio ethyl acrylate (Dichem Korea) - RI 1.61

Standard acrylates-

Miramer M240 (Bisphenol A ethoxylated acrylate) - RI 1.537
Miramer M2100 (Phenoxy Benzyl Acrylate) - RI 1.565
Miramer M1142 (1-Ethoxylated -o-phenylphenol acrylate) - RI 1.577
Miramer HR2582 (Urethane Acrylate) - RI- 1.595
Miramer HR2200 (Epoxy acrylate) - RI- 1.559
Miramer HR3000 (Urethane acrylate) - RI 1.571
Miramer HR3200 (Urethane acrylate) - RI 1.565
Miramer HR3700 (Urethane acrylate) - RI 1.585
Miramer HR3800 (Urethane acrylate) - RI 1.573
HR4000 (Urethane acrylate, RI 1.582)

Examples of low refractive index components:

Fluoro-acrylate monomers from the following-

PDFA - pentadecafluorooctyl acrylate - RI 1.3390
TFA = 2,2,2-trifluoroethyl acrylate
HFBA- heptafluorobutyl acrylate - RI 1.3670
HDFA = 1H, 1H,2H,2H-heptadecafluorodecyl acrylate,
HFIPA = hexafluoroisopropy acrylate,
TDFA = 1H,1H,2H,2H-tridecafluorooctyl acrylate
Tetrafluoro-3-(heptafluoropropoxy)propyl acrylate - RI 1.3460
Tetrafluoro-3-(pentafluoroethoxy)propyl acrylate - RI 1.3480
Tetrafluoroethylene - RI 1.3500
Undecafluorohexyl acrylate - RI 1.3560
Nonafluoropentyl acrylate - RI 1.3600
Tetrafluoro-3-(trifluoromethoxy)propyl acrylate - RI 1.3600
Pentafluorovinyl propionate - RI 1.3640
Trifluorovinyl acetate - RI 1.3750

Octafluoropentyl acrylate - RI 1.3800
Methyl 3,3,3-trifluoropropyl siloxane - RI 1.3830
Pentafluoropropyl acrylate - RI 1.3850
1H, 1H-Heptafluorobutyl(meth)acrylate,
1H, 1H,5H-octafluoropentyl(meth)acrylate,
2,2,3,4,4,4-Hexafluorobutyl(meth)acrylate,
perfluorooctylethyl(meth)acrylate,
trifluoroethyl(meth)acrylate,
trifluoroethyl(meth)acrylate, and
perfluorooctylethyl(meth)acrylate

Preferred commercially available examples include:

Defensa OP-188 (from DIC Japan)
Defensa OP-3801
Defensa OP- 4002
Defensa OP-4003,
Defensa OP-4004,
Sartomer CN 4002 (from Sartomer)
Viscoat 8F (from Kowa Europe GmbH)
Viscoat 3F
Fluorolink® MD 700 (from Solvay Solexis Inc.),
Fluorolink® MD 500, and
Fomblin® MD 40

The high refractive index formulation and the low refractive index formulation may each optionally further include one or more components with higher functionality (meaning in this case a higher number of acrylic groups in the material), to increase the degree of cross-linking, which leads to reduced tackiness and improved mechanical properties. Examples of suitable higher functional acrylate components include:

trimethylolpropane triacrylate,
pentaerythritol triacrylate,
ethoxylated (3) trimethylolpropane triacrylate,
ethoxylated (3) trimethylolpropane triacrylate,
propoxylated (3) trimethylolpropane triacrylate,
ethoxylated (6) trimethylolpropane triacrylate,
tris(2-hydroxy ethyl) isocyanurate triacrylate,
dipropylene glycol diacrylate,
propoxylated (3) glyceryl triacrylate,
propoxylated (3) glyceryl triacrylate,
pentaerythritol tetraacrylate.

A curing agent may also be included in one or both of the formulations. A range of suitable photo- and thermo- initiators are commercially available. Photopolymerisation is preferred for the current application due to faster cure, although thermo initiation can also be used. Some exaples of suitable free radical type photo-initiators are given below:

1-phenyl-2-hydroxy-2-methyl-1-propanone,
2 hydroxy 2-methyl 1-phenyl propan-1-one,
2,2-dimethoxy-1,2-di(phenyl)ethanone

1-hydroxycyclohexyl phenyl ketone,
benzophenones,
bis-acyl phosphine oxide (BAPO),
aminoketones,
thioxanthones,
(2,4,6-trimethylbenzoylphenyl phosphinate),
2-Benzyl-2-(dimethylamino)-1-[4-(4-morpholinyl)phenyl]-1-butanone

A preferred example formulation of a high refractive index transparent material is:

40 wt% DIC Unidic EPC 1027,
30 wt% Miramer HR 6042,
25 wt% Miramer HR3700.
5 wt% Photo-initiators and common surface active additives

A preferred example formulation of a low refractive index transparent material is:

50 wt% Defensa OP-188
30 wt% Viscoat 8F
15 wt% Ethoxylated (3) trimethylolpropane triacrylate,
5 wt% Photo-initiators and additives

Examples of optically variable effects which can be deployed in the above security devices will now be described.

An example of a lenticular device is shown in Figure 12 in order to illustrate certain principles of operation. Figure 12(a) shows the device in perspective and it will be seen that an array of cylindrical lenses 11 is arranged on the transparent polymer substrate 3. An array 19a of image elements or "strips" is provided on the opposite side of substrate 3 underlying (and overlapping with) the cylindrical lenses 11 and, as shown best in the cross-section of Figure 12(b), each of the image strips corresponds to a portion of one of several images labelled A to G (only 2 images A and B are labelled in Figure 12(a)). Under each lens of the lenticular array 11, one image slice from each of regions A to G is provided, forming a set of image elements. Under the first lens, the strips in the set will each correspond to a first segment of the respective image A to G and under the next lens, the strips in the next set will each correspond to a second segment of respective images A to G and so forth. Each lens is arranged to focus substantially in the plane of the image array 19a using the principles described above such that, ideally, only one strip can be viewed from one viewing position through each lens 11. As such, at any viewing angle, only the strips corresponding to one of the images (A, B, C etc.) will be seen through the lenses. For example, as depicted in Figure 12(b), when the device is viewed straight-on (i.e. parallel to the Z axis), each strip of image D will be viewed such that a composite image of image D is displayed (observer $O_1$). When the device

is tilted about the Y axis in a first direction, only the image strips from image C will be viewed (observer $O_2$), whereas when tilted in the opposite direction, only the image strips from image E will be viewed (observer $O_3$).

The strips are arranged as slices of an image, i.e. the strips A are all slices from one image, similarly for strips B and C etc. As a result, as the device is tilted a series of different images will be seen. The images could be related or unrelated. The simplest device would have two images that would flip between each other as the device is tilted. An example of the images which might be seen from two different viewing positions is shown in Figure 12(c), where (i) shows a first image A visible at one set of viewing angles and (ii) shows a different image B exhibited at a different set of viewing angles. Alternatively, the images could be a series of images that have been shifted laterally strip to strip, generating a lenticular animation effect so that the image appears to move. Similarly, the change from image to image could give rise to more complex animations (e.g. parts of the image changing in a quasi-continuous fashion), morphing (one image transforms in small steps to another image) or zooming (an image gets larger or smaller in steps).

Figure 13 illustrates the principles of operation of a moire magnification device, in plan view. For illustration, both the microimages 21 forming the image array 19a and the magnified versions 22 thereof are shown in the Figure. However, in reality when the device is viewed through the lenses 11 only the magnified images 22 are visible. In this example, the image array 19 comprises an array of identical microimage 21 each displaying a banner symbol. The microimages have a similar periodicity to the array of lenses 11, which here are spherical or aspherical lenses arranged in a 2D grid, but the pitches of the two arrays are slightly mismatched. Alternatively they can be the same but have rotationally mismatched orientations. The lenses sample different points of each microimage across the array, resulting in the display of synthetically magnified versions 22 of the microimages which appear to sit on an image plane the height of which depends on the focal length and magnification factor. As the device is tilted the position of the magnified image appears to move relative to the reference frame of the device.

An integral imaging device would have a similar construction to that shown in Figure 13 but comprises microimages which vary from one to the next across the array, all of the same object but different angles, resulting in a 3D magnified image of the object.

As mentioned above, focal length of the lenses is directly related to their size (radius) and for an image array 19a on the second surface of the polymer substrate to be in focus, the optical geometry must be taken into account when selecting the thickness of the transparent layer 12. In preferred examples the thickness is in the range 5 to 200 microns. "Thick" devices at the upper end of this range are suitable for incorporation into documents such as identification cards and drivers licences, as well as into labels and similar. For documents such as banknotes, thinner devices are desired as mentioned above. At the lower end of the range, the limit is set by diffraction effects that arise as the focusing element diameter reduces: e.g. lenses of less than 10 micron base diameter and more especially less than 5 microns will tend to suffer from such effects. Therefore the limiting thickness of such structures is believed to lie between about 5 and 10 microns.

The periodicity and therefore maximum base diameter of the focusing elements is preferably in the range 5 to $200\mu m$, more preferably 10 to $60\mu m$ and even more preferably 20 to $40\mu m$. The f number for the lenticular focusing elements is preferably in the range 0.1 to 16 and more preferably 0.5 to 4. The lenses could be cylindrical, spherical, aspherical or any other type as required by the application.

In all of the above examples, the image array(s) 19a, 19b etc could be formed in various different ways. For example, the image elements could be formed of ink, for example printed onto the substrate 3 or onto another layer which is then positioned adjacent to the substrate 3 or applied onto it. However, in other examples the image elements can be formed by a relief structure and a variety of different relief structure suitable for this are shown in Figure 14. Thus, Figure 14a illustrates image regions of the image elements (IM), in the form of embossed or recessed regions while the non-embossed portions correspond to the non-imaged regions of the elements (NI). Figure 14b illustrates image regions of the elements in the form of debossed lines or bumps.

In another approach, the relief structures can be in the form of diffraction gratings (Figure 14c) or moth eye / fine pitch gratings (Figure 14d). Where the image elements are formed by diffraction gratings, then different image portions of an image (within one image element or in different elements) can be formed by gratings with different characteristics. The difference may be in the pitch of the grating or rotation. This can be used to achieve a multi-colour diffractive image which will also exhibit a lenticular optical effect such as an animation through the mechanism described above. For example, if the image elements had been created by writing different diffraction tracks for each element, then as the device is tilted, lenticular transition from one image to another will occur as described above, during which the colour of the images will progressively change due to the different diffraction gratings. A preferred method for writing such a grating would be to use electron beam writing techniques or dot matrix techniques.

Such diffraction gratings for moth eye / fine pitch gratings can also be located on recesses or bumps such as those of Figures 14a and b, as shown in Figures 14e and f respectively.

Figure 14g illustrates the use of a simple scattering structure providing an achromatic effect.

Further, in some cases the recesses of Figure 14a could be provided with an ink or the debossed regions or bumps in Figure 14b could be provided with an ink. The latter is shown in Figure 14h where ink layers 200 are provided on bumps 210. Thus the image areas of each image element could be created by forming appropriate raised regions or bumps in a resin layer provided on a transparent substrate. This could be achieved for example by cast curing or embossing. A coloured ink is then transferred onto the raised regions typically using a lithographic, flexographic or gravure process. In some examples, some image elements could be printed with one colour and other image elements could be printed with a second colour. In this manner when the device is tilted to create the lenticular animation effect described above, the images will also be seen to change colour as the observer moves from one view to another. In another example all of the image elements in one region of the device could be provided in one colour and then all in a different colour in another region of the device.

Finally, Figure 14i illustrates the use of an Aztec structure.

Additionally, image and non-image areas could be defined by combination of different element types, e.g. the image areas could be formed from moth eye structures whilst the non-image areas could be formed from gratings. Alternatively, the image and non-image areas could even be formed by gratings of different pitch or orientation.

Where the image elements are formed solely of grating or moth-eye type structures, the relief depth will typically be in the range 0.05 microns to 0.5 microns. For structures such as those shown in Figures 14 a, b, e, f, h and i, the height or depth of the bumps/recesses is preferably in the range 0.5 to $10\mu$m and more preferably in the range of 1 to $2\mu$m. The typical width of the bumps or recesses will be defined by the nature of the artwork but will typically be less than $100\mu$m, more preferably less than $50\mu$m and even more preferably less than $25\mu$m. The size of the image elements and therefore the size of the bumps or recesses will be dependent on factors including the type of optical effect required, the size of the focusing elements and the desired device thickness. For example if the diameter of the focusing elements is $30\mu$m then each image element may be around $15\mu$m wide or less. Alternatively for a smooth lenticular animation effect it is preferable to have as many views as possible, typically at least five but ideally as many as thirty. In this case the size of the elements (and associated bumps or recesses) should be in the range 0.1 to $6\mu$m. In theory, there is no limit as to the number of image elements which can be included but in practice as the number increases, the resolution of the displayed images will decrease, since an ever decreasing proportion of the devices surface area is available for the display of each image.

The security substrates and devices of the current invention can optionally be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

## Claims

1. A security substrate, comprising:

   a polymer substrate (3) having first and second surfaces;
   an array of focussing elements (11) in the form of a surface relief across a first region of the polymer substrate, the surface relief being defined in the surface of a transparent base layer (12), wherein the transparent base layer comprises either the polymer substrate or a layer disposed thereon;
   an optical adjustment layer (15a, 15c) disposed on the transparent base layer across a second region of the polymer substrate, which second region includes at least the first region, the optical adjustment layer having a first surface in contact with the surface relief of the transparent base layer and an opposing second surface having a profile which is not operative to focus visible light, the optical adjustment layer comprising a first transparent material extending across a first sub-region of the array of focussing elements, the first sub-region comprising all or only part of the first region, the first transparent material having a refractive index different from that of the transparent base layer, whereby the focussing element(s) in the first sub-region of the array are functional focussing element(s); and **characterised by**
   at least one first masking layer, comprising a reflective and/or non-transparent material, disposed over the optical adjustment layer across a third region of the polymer substrate, the third region defining at least one gap in the first masking layer(s) which gap includes at least part of the first sub-region, such that functional focusing elements of the array are revealed through the at least one gap.

2. A security substrate according to claim 1, wherein the at least one gap in the first masking layer(s) reveals only a subset of the functional focusing elements of the array, other functional focusing elements of the array being substantially concealed by the first masking layer(s), at least when the security substrate is viewed in reflected light from the side of the security substrate on which the first masking layer(s) are disposed.

3. A security substrate according to claim 1 or claim 2, wherein the optical adjustment layer further comprises a second transparent material extending across a second sub-region of the array of focussing elements, the second transparent material having a refractive index different from that of the transparent base material and from the first transparent material such that the focussing element(s) in the second sub-region of the array are functional focussing element(s) with a focal length different from that of the focussing elements in the first sub-region of the array.

4. A security substrate according to claim 1, 2 or 3, wherein the optical adjustment layer further comprises a third transparent material extending across a third sub-region of the array of focussing elements, the third transparent material having a refractive index substantially the same as that of the transparent base material, such that the focussing element(s) in the third sub-region are non-functional focussing element(s).

5. A security substrate according to any of the preceding claims, wherein the second region covered by the optical adjustment layer extends across substantially the whole area of the polymer substrate.

6. A security substrate according to any of the preceding claims, wherein the profile of the second surface of the optical adjustment layer is substantially planar.

7. A security substrate according to any of the preceding claims, wherein the array of focussing elements comprises a convex surface relief structure defined in the surface of the transparent base material, the transparent base material having a higher refractive index than that of the first transparent material and, if provided, the second transparent material; or wherein the array of focussing elements comprises a concave surface relief structure defined in the surface of the transparent base material, the transparent base material having a lower refractive index than that of the first transparent material and, if provided, the second transparent material.

8. A security substrate according to any of the preceding claims, further comprising an image array in at least part of the first sub-region of the polymer substrate, the image array located in a plane spaced from that of the focussing elements by a distance substantially corresponding to a focal length of the functional focusing elements in the at least part of the first sub-region, such that the functional focusing elements in the first sub-region exhibit a substantially focussed image of the image array, the image array preferably extending across substantially all of the first region; and preferably wherein either: the image array is located on the second surface of the polymer substrate; or the transparent base layer comprises a layer disposed on the first surface of the polymer substrate and the image array is located on the first surface of the polymer substrate.

9. A security substrate according to any of the preceding claims, wherein the security substrate is a security document, preferably any of a banknote, an identity document, a passport, a licence, a certificate, a cheque, a visa or a stamp, and the at least one first masking layer is at least one opacifying layer comprising a non-transparent material.

10. A security substrate according to any of the preceding claims, wherein the security substrate is a security article, preferably a security thread, strip, patch or foil.

11. A method of manufacturing a security substrate, comprising:

> providing a polymer substrate (3) having first and second surfaces;
> forming an array of focussing elements (11) across a first region of the polymer substrate as a surface relief in the surface of a transparent base layer, wherein the transparent base layer comprises either the polymer substrate or a layer disposed thereon;
> applying an optical adjustment layer (15a, 15c) onto the transparent base layer across a second region of the polymer substrate, which second region includes at least the first region, the optical adjustment layer having a first surface in contact with the surface relief of the transparent base layer and an opposing second surface having a profile which is not operative to focus visible light, the optical adjustment layer comprising a first transparent material extending across a first sub-region of the array of focussing elements, the first sub-region comprising all or only part of the first region, the first transparent material having a refractive index different from that of the transparent base layer, whereby the focussing element(s) in the first sub-region of the array are functional focussing element(s); and **characterised by**
> applying at least one first masking layer, comprising a reflective and/or non-transparent material, over the optical adjustment layer across a third region of the polymer substrate, the third region defining at least one gap in the first masking layer(s) which gap includes at least part of the first sub-region, such that functional focusing elements of the array are revealed through the at least one gap.

**12.** A security device, comprising:

a polymer substrate (3) having first and second surfaces;

an array of focussing elements (11) in the form of a surface relief across a first region of the polymer substrate, the surface relief being defined in the surface of a transparent base layer, wherein the transparent base layer comprises either the polymer substrate or a layer disposed thereon, the array of focussing elements being configured to have a uniform base focal length across the first region when the surface relief is in contact with air;

an optical adjustment layer (15a, 15c) disposed on the transparent base layer across a second region of the polymer substrate, which second region includes at least a first sub-region of the array of focussing elements, the first sub-region not including the whole of the first region, the optical adjustment layer having a first surface in contact with the surface relief and an opposing second surface having a profile which is not operative to focus visible light, the optical adjustment layer comprising a first transparent material extending only across the first sub-region of the array of focussing elements, the first transparent material having a refractive index different from that of the transparent base layer, whereby the focussing element(s) in the first sub-region of the array have a first focal length which is different from the base focal length; and **characterised by**

a first image array in at least part of the first sub-region of the substrate, the first image array being located in a plane spaced from that of the focussing elements by a distance substantially corresponding to the first focal length, such that the focusing elements in the first sub-region exhibit a substantially focussed image of the first image array and the focusing elements outside the first sub-region do not.

**13.** A security device according to claim 12, wherein the first image array is located on the second surface of the polymer substrate.

**14.** A security device according to claim 12 or 13, wherein the optical adjustment layer further comprises a second transparent material extending across a second sub-region of the array of focusing elements, the second transparent material having a refractive index different from that of the transparent base layer and different from that of the first transparent material, whereby the focussing element(s) in the second sub-region of the array have a second focal length which is different from the first and base focal lengths, and the security device preferably further comprising a second image array in at least part of the second sub-region of the substrate, the second image array being located in a plane spaced from that of the focussing elements by a distance substantially corresponding to the second focal length, such that the focusing elements in the second sub-region exhibit a substantially focussed image of the second image array and the focusing elements outside the second sub-region do not, the second image array preferably being located on the first surface of the substrate or on an optical spacer layer carried on the second surface of the substrate.

**15.** A security device according to any of claims 12 to 14, wherein the optical adjustment layer further comprises a third transparent material extending across a third sub-region of the array of focusing elements, the third transparent material having a refractive index substantially equal to that of the transparent base layer, whereby the focussing element(s) in the third sub-region of the array are non-operative, and wherein the third transparent material preferably extends over the first transparent material and/or, if provided, the second transparent material, contacting the surface relief only in the third sub-region, wherein preferably the third transparent material extends across substantially the whole of the first region and more preferably the whole of the second region.

**16.** A security device according to any of claims 12 to 15, wherein the optical adjustment layer is absent across a fourth sub-region of the array of focusing elements, whereby in the fourth sub-region the focussing elements are exposed to air and have the base focal length

and the security device preferably further comprising a further image array in at least part of the fourth sub-region of the substrate, the further image array being located in a plane spaced from that of the focussing elements by a distance substantially corresponding to the base focal length, such that the focusing elements in the fourth sub-region exhibit a substantially focussed image of the further image array and the focusing elements outside the fourth sub-region do not, the further image array preferably being located on the first surface of the substrate or on an optical spacer layer carried on the second surface of the substrate.

**17.** A security device according to any of claims 12 to 16, wherein the second region covered by the optical adjustment layer extends across substantially the whole area of the polymer substrate.

**18.** A security device according to any of claims 12 to 17, wherein the array of focussing elements comprises a convex surface relief structure defined in the surface of the transparent base material, the transparent base material having a higher refractive index than that of the first transparent material and, if provided, the second transparent material; or wherein the array of focussing elements comprises a concave surface relief structure defined in the surface of the transparent base material, the transparent base material having a lower refractive index than that of the first transparent material and, if provided, the second transparent material.

19. A security device according to any of claims 12 to 18, wherein the profile of the second surface of the optical adjustment layer is substantially planar.

20. A security article comprising a security device according to any of claims 12 to 19, wherein the security article is preferably a security thread, strip, foil, insert or patch.

21. A security document comprising a security device according to any of claims 12 to 19 or a security article according to claim 20, wherein the security document is preferably a banknote, an identity document, a passport, a licence, a certificate, a cheque, a visa or a stamp, and preferably wherein the polymer substrate constitutes the document substrate and the security document further comprises at least one first opacifying layer, comprising a non-transparent material, over the optical adjustment layer across a third region of the polymer substrate, the third region defining at least one gap in the first opacifying layer(s) which gap includes at least part, preferably all, of the first sub-region, such that a focussed image of the first image layer is exhibited through the gap.

22. A method of manufacturing a security device, comprising:

providing a polymer substrate (3) having first and second surfaces;
forming an array of focussing elements (11) as a surface relief across a first region of the polymer substrate, the surface relief being defined in the surface of a transparent base layer, wherein the transparent base layer comprises either the polymer substrate or a layer disposed thereon, the array of focussing elements being configured to have a uniform base focal length across the first region when the surface relief is in contact with air;
applying an optical adjustment layer (15a, 15c) onto the transparent base layer across a second region of the polymer substrate, which second region includes at least a first sub-region of the array of focussing elements, the first sub-region not including the whole of the first region, the optical adjustment layer having a first surface in contact with the surface relief and an opposing second surface having a profile which is not operative to focus visible light, the optical adjustment layer comprising a first transparent material extending only across the first sub-region of the array of focussing elements, the first transparent material having a refractive index different from that of the transparent base layer, whereby the focussing element(s) in the first sub-region of the array have a first focal length which is different from the base focal length; and **characterised by** forming a first image array in at least part of the first sub-region of the substrate, the first image array being located in a plane spaced from that of the focussing elements by a distance substantially corresponding to the first focal length, such that the focusing elements in the first sub-region exhibit a substantially focussed image of the first image array and the focusing elements outside the first sub-region do not.

## Patentansprüche

1. Sicherheitssubstrat, Folgendes umfassend:

ein Polymersubstrat (3) mit einer ersten und einer zweiten Oberfläche;
eine Anordnung von Fokussierelementen (11) in der Form eines Oberflächenreliefs über einen ersten Bereich des Polymersubstrats, wobei das Oberflächenrelief in der Oberfläche einer transparenten Grundschicht (12) definiert ist, wobei die transparente Grundschicht entweder das Polymersubstrat oder eine darauf eingerichtete Schicht umfasst;
eine optische Anpassungsschicht (15a, 15c), die auf der transparenten Grundschicht über einen zweiten Bereich des Polymersubstrats eingerichtet ist, wobei der zweite Bereich wenigstens den ersten Bereich einschließt, wobei die optische Anpassungsschicht eine erste Oberfläche in Berührung mit dem Oberflächenrelief der transparenten Grundschicht und eine gegenüberliegende zweite Oberfläche mit einem Profil, das nicht wirksam ist, um sichtbares Licht zu fokussieren, aufweist, wobei die optische Anpassungsschicht ein erstes transparentes Material umfasst, das sich über einen ersten Unterbereich der Anordnung von Fokussierelementen erstreckt, wobei der erste Unterbereich den gesamten ersten Bereich oder nur einen Teil des ersten Bereichs umfasst, wobei das erste transparente Material einen Brechungsindex aufweist, der sich von dem der transparenten Grundschicht unterscheidet, wobei die Fokussierelemente in dem ersten Unterbereich der Anordnung funktionelle Fokussierelemente sind; und

**gekennzeichnet durch** wenigstens eine erste Maskierungsschicht, die ein reflektierendes und/oder nicht transparentes Material umfasst, das über der optischen Anpassungsschicht über einen dritten Bereich des Polymersubstrats eingerichtet ist, wobei der dritte Bereich wenigstens einen Spalt in den ersten Maskierungsschichten definiert, wobei der Spalt wenigstens einen Teil des ersten Unterbereichs derart einschließt, dass funktionelle Fokussierelemente der Anordnung durch den wenigstens einen Spalt offenbart werden.

2. Sicherheitssubstrat nach Anspruch 1, wobei der wenigstens eine Spalt in den ersten Maskierungsschichten nur eine Untermenge der funktionellen Fokussierelemente der Anordnung offenbart, wobei andere funktionelle Fokussierelemente der Anordnung im Wesentlichen durch die ersten Maskierungsschichten verborgen werden, zumindest wenn das Sicherheitssubstrat in reflektiertem Licht von der Seite des Sicherheitssubstrats betrachtet wird, auf der die ersten Maskierungsschichten eingerichtet sind.

3. Sicherheitssubstrat nach Anspruch 1 oder 2, wobei die optische Anpassungsschicht ferner ein zweites transparentes Material umfasst, das sich über einen zweiten Unterbereich der Anordnung von Fokussierelementen erstreckt, wobei das zweite transparente Material einen Brechungsindex aufweist, der sich von dem des transparenten Grundmaterials und von dem ersten transparenten Material derart unterscheidet, dass die Fokussierelemente in dem zweiten Unterbereich der Anordnung funktionelle Fokussierelemente mit einer Brennweite sind, die sich von der der Fokussierelemente in dem ersten Unterbereich der Anordnung unterscheidet.

4. Sicherheitssubstrat nach Anspruch 1, 2 oder 3, wobei die optische Anpassungsschicht ferner ein drittes transparentes Material umfasst, das sich über einen dritten Unterbereich der Anordnung von Fokussierelementen erstreckt, wobei das dritte transparente Material einen Brechungsindex aufweist, der im Wesentlichen derselbe ist wie der des transparenten Grundmaterials, derart, dass die Fokussierelemente in dem dritten Unterbereich nicht-funktionelle Fokussierelemente sind.

5. Sicherheitssubstrat nach einem der vorhergehenden Ansprüche, wobei der zweite durch die optische Anpassungsschicht abgedeckte Bereich sich im Wesentlichen über die ganze Fläche des Polymersubstrats erstreckt.

6. Sicherheitssubstrat nach einem der vorhergehenden Ansprüche, wobei das Profil der zweiten Oberfläche der optischen Anpassungsschicht im Wesentlichen flächig ist.

7. Sicherheitssubstrat nach einem der vorhergehenden Ansprüche, wobei die Anordnung von Fokussierelementen eine konvexe Oberflächenreliefstruktur umfasst, die in der Oberfläche des transparenten Grundmaterials definiert ist, wobei das transparente Grundmaterial einen höheren Brechungsindex als den des ersten transparenten Materials und, sofern vorgesehen, des zweiten transparenten Materials aufweist; oder

wobei die Anordnung von Fokussierelementen eine konkave Oberflächenreliefstruktur umfasst, die in der Oberfläche des transparenten Grundmaterials definiert ist, wobei das transparente Grundmaterial einen niedrigeren Brechungsindex als den des ersten transparenten Materials und, sofern vorgesehen, des zweiten transparenten Materials aufweist.

8. Sicherheitssubstrat nach einem der vorhergehenden Ansprüche, das ferner eine Bildanordnung in wenigstens einem Teil des ersten Unterbereichs des Polymersubstrats umfasst, wobei die Bildanordnung in einer Ebene liegt, die von der der Fokussierelemente durch eine Entfernung beabstandet ist, die im Wesentlichen einer Brennweite der funktionellen Fokussierelemente in dem wenigstens einen Teil des ersten Unterbereichs entspricht, derart, dass die funktionellen Fokussierelemente in dem ersten Unterbereich ein im Wesentlichen fokussiertes Bild der Bildanordnung vorzeigen, wobei die Bildanordnung sich bevorzugt im Wesentlichen über den gesamten ersten Bereich erstreckt; und

wobei bevorzugt entweder:

die Bildanordnung auf der zweiten Oberfläche des Polymersubstrats liegt; oder

die transparente Grundschicht eine Schicht umfasst, die auf der ersten Oberfläche des Polymersubstrats eingerichtet ist, und die Bildanordnung auf der ersten Oberfläche des Polymersubstrats liegt.

9. Sicherheitssubstrat nach einem der vorhergehenden Ansprüche, wobei das Sicherheitssubstrat ein Sicherheitsdokument ist, bevorzugt eine Banknote, ein Identitätsdokument, ein Pass, ein Führerschein, ein Zertifikat, ein Scheck, ein Visum oder ein Stempel, und die wenigstens eine erste Maskierungsschicht wenigstens eine Trübungsschicht ist, die ein nicht transparentes Material umfasst.

10. Sicherheitssubstrat nach einem der vorhergehenden Ansprüche, wobei das Sicherheitssubstrat ein Sicherheitsgegenstand ist, bevorzugt ein Sicherheitsfaden, - streifen oder -patch oder eine Sicherheitsfolie.

**11.** Verfahren zum Herstellen eines Sicherheitssubstrats, Folgendes umfassend:

Bereitstellen eines Polymersubstrats (3) mit einer ersten und einer zweiten Oberfläche;
Ausbilden einer Anordnung von Fokussierelementen (11) über einen ersten Bereich des Polymersubstrats als ein Oberflächenrelief in der Oberfläche einer transparenten Grundschicht, wobei die transparente Grundschicht entweder das Polymersubstrat oder eine darauf eingerichtete Schicht umfasst;
Aufbringen einer optischen Anpassungsschicht (15a, 15c) auf die transparente Grundschicht über einen zweiten Bereich des Polymersubstrats, wobei der zweite Bereich wenigstens den ersten Bereich einschließt, wobei die optische Anpassungsschicht eine erste Oberfläche in Berührung mit dem Oberflächenrelief der transparenten Grundschicht und eine gegenüberliegende zweite Oberfläche mit einem Profil, das nicht wirksam ist, um sichtbares Licht zu fokussieren, aufweist, wobei die optische Anpassungsschicht ein erstes transparentes Material umfasst, das sich über einen ersten Unterbereich der Anordnung von Fokussierelementen erstreckt, wobei der erste Unterbereich den gesamten ersten Bereich oder nur einen Teil des ersten Bereichs umfasst, wobei das erste transparente Material einen Brechungsindex aufweist, der sich von dem der transparenten Grundschicht unterscheidet, wobei die Fokussierelemente in dem ersten Unterbereich der Anordnung funktionelle Fokussierelemente sind; und
**gekennzeichnet durch** Aufbringen wenigstens einer ersten Maskierungsschicht, die ein reflektierendes und/oder nicht transparentes Material umfasst, über die optische Anpassungsschicht über einen dritten Bereich des Polymersubstrats, wobei der dritte Bereich wenigstens einen Spalt in den ersten Maskierungsschichten definiert, wobei der Spalt wenigstens einen Teil des ersten Unterbereichs derart einschließt, dass funktionelle Fokussierelemente der Anordnung durch den wenigstens einen Spalt offenbart werden.

**12.** Sicherheitsvorrichtung, Folgendes umfassend:

ein Polymersubstrat (3) mit einer ersten und einer zweiten Oberfläche;
eine Anordnung von Fokussierelementen (11) in der Form eines Oberflächenreliefs über einen ersten Bereich des Polymersubstrats, wobei das Oberflächenrelief in der Oberfläche einer transparenten Grundschicht definiert ist, wobei die transparente Grundschicht entweder das Polymersubstrat oder eine darauf eingerichtete Schicht umfasst, wobei die Anordnung von Fokussierelementen konfiguriert ist, um eine einheitliche Grundbrennweite über den ersten Bereich aufzuweisen, wenn das Oberflächenrelief in Berührung mit Luft ist;
eine optische Anpassungsschicht (15a, 15c), die auf der transparenten Grundschicht über einen zweiten Bereich des Polymersubstrats eingerichtet ist, wobei der zweite Bereich wenigstens einen ersten Unterbereich der Anordnung von Fokussierelementen einschließt, wobei der erste Unterbereich nicht den ganzen ersten Bereich einschließt, wobei die optische Anpassungsschicht eine erste Oberfläche in Berührung mit dem Oberflächenrelief und eine gegenüberliegende zweite Oberfläche mit einem Profil, das nicht wirksam ist, um sichtbares Licht zu fokussieren, aufweist, wobei die optische Anpassungsschicht ein erstes transparentes Material umfasst, das sich nur über den ersten Unterbereich der Anordnung von Fokussierelementen erstreckt, wobei das erste transparente Material einen Brechungsindex aufweist, der sich von dem der transparenten Grundschicht unterscheidet, wobei die Fokussierelemente in dem ersten Unterbereich der Anordnung eine erste Brennweite aufweisen, die sich von der Grundbrennweite unterscheidet; und
**gekennzeichnet durch** eine erste Bildanordnung in wenigstens einem Teil des ersten Unterbereichs des Substrats, wobei die erste Bildanordnung in einer Ebene liegt, die von der der Fokussierelemente durch eine Entfernung beabstandet ist, die im Wesentlichen der ersten Brennweite entspricht, derart, dass die Fokussierelemente in dem ersten Unterbereich ein im Wesentlichen fokussiertes Bild der ersten Bildanordnung vorzeigen und die Fokussierelemente außerhalb des ersten Unterbereichs dies nicht tun.

**13.** Sicherheitsvorrichtung nach Anspruch 12, wobei die erste Bildanordnung auf der zweiten Oberfläche des Polymersubstrats liegt.

**14.** Sicherheitsvorrichtung nach Anspruch 12 oder 13, wobei die optische Anpassungsschicht ferner ein zweites transparentes Material umfasst, das sich über einen zweiten Unterbereich der Anordnung von Fokussierelementen erstreckt, wobei das zweite transparente Material einen Brechungsindex aufweist, der sich von dem der transparenten Grundschicht und von dem des ersten transparenten Materials unterscheidet, wobei die Fokussierelemente in dem zweiten Unterbereich der Anordnung eine zweite Brennweite aufweisen, die sich von der ersten und der Grundbrennweite unterscheidet, und wobei die Sicherheitsvorrichtung bevorzugt ferner eine zweite Bildanordnung in wenigstens einem Teil des zweiten Unterbereichs des Substrats umfasst, wobei die zweite Bildanordnung in einer Ebene liegt, die von der der Fokussierelemente durch eine Entfernung, die im Wesentlichen der zweiten Brennweite entspricht, beabstandet ist, derart, dass die Fokussierelemente in dem zweiten Unterbereich ein im Wesentlichen fokussiertes Bild der zweiten Bildanordnung vorzeigen und die Fokussierelemente außerhalb des zweiten Unterbereichs dies nicht tun, wobei die zweite Bildanordnung bevorzugt auf der ersten Oberfläche des Substrats oder auf einer optischen Abstandsschicht liegt, die auf der zweiten Oberfläche des Substrats getragen wird.

15. Sicherheitsvorrichtung nach einem der Ansprüche 12 bis 14, wobei die optische Anpassungsschicht ferner ein drittes transparentes Material umfasst, das sich über einen dritten Unterbereich der Anordnung von Fokussierelementen erstreckt, wobei das dritte transparente Material einen Brechungsindex aufweist, der im Wesentlichen gleich ist wie der der transparenten Grundschicht, wobei die Fokussierelemente in dem dritten Unterbereich der Anordnung nicht wirksam sind, und wobei das dritte transparente Material sich bevorzugt über das erste transparente Material und/oder, sofern vorgesehen, das zweite transparente Material erstreckt, und das Oberflächenrelief nur in dem dritten Unterbereich berührt, wobei bevorzugt das dritte transparente Material sich über im Wesentlichen den ganzen ersten Bereich und, besonders bevorzugt, den ganzen zweiten Bereich erstreckt.

16. Sicherheitsvorrichtung nach einem der Ansprüche 12 bis 15, wobei die optische Anpassungsschicht über einen vierten Unterbereich der Anordnung von Fokussierelementen abwesend ist, wobei in dem vierten Unterbereich die Fokussierelemente Luft ausgesetzt sind und die Grundbrennweite aufweisen, und wobei die Sicherheitsvorrichtung bevorzugt ferner eine weitere Bildanordnung in wenigstens einem Teil des vierten Unterbereichs des Substrats umfasst, wobei die weitere Bildanordnung in einer Ebene liegt, die von der der Fokussierelemente durch eine Entfernung, die im Wesentlichen der Grundbrennweite entspricht, beabstandet ist, derart, dass die Fokussierelemente in dem vierten Unterbereich ein im Wesentlichen fokussiertes Bild der weiteren Bildanordnung vorzeigen und die Fokussierelemente außerhalb des vierten Unterbereichs dies nicht tun, wobei die weitere Bildanordnung bevorzugt auf der ersten Oberfläche des Substrats oder auf einer optischen Abstandsschicht liegt, die auf der zweiten Oberfläche des Substrats getragen wird.

17. Sicherheitsvorrichtung nach einem der Ansprüche 12 bis 16, wobei der zweite durch die optische Anpassungsschicht abgedeckte Bereich sich im Wesentlichen über die ganze Fläche des Polymersubstrats erstreckt.

18. Sicherheitsvorrichtung nach einem der Ansprüche 12 bis 17, wobei die Anordnung von Fokussierelementen eine konvexe Oberflächenreliefstruktur umfasst, die in der Oberfläche des transparenten Grundmaterials definiert ist, wobei das transparente Grundmaterial einen höheren Brechungsindex als den des ersten transparenten Materials und, sofern vorgesehen, des zweiten transparenten Materials aufweist; oder
wobei die Anordnung von Fokussierelementen eine konkave Oberflächenreliefstruktur umfasst, die in der Oberfläche des transparenten Grundmaterials definiert ist, wobei das transparente Grundmaterial einen niedrigeren Brechungsindex als den des ersten transparenten Materials und, sofern vorgesehen, des zweiten transparenten Materials aufweist.

19. Sicherheitsvorrichtung nach einem der Ansprüche 12 bis 18, wobei das Profil der zweiten Oberfläche der optischen Anpassungsschicht im Wesentlichen flächig ist.

20. Sicherheitsgegenstand, umfassend eine Sicherheitsvorrichtung nach einem der Ansprüche 12 bis 19, wobei der Sicherheitsgegenstand bevorzugt ein Sicherheitsfaden oder -streifen, eine Sicherheitsfolie oder -einlage oder ein Sicherheitspatch ist.

21. Sicherheitsdokument, umfassend eine Sicherheitsvorrichtung nach einem der Ansprüche 12 bis 19 oder einen Sicherheitsgegenstand nach Anspruch 20, wobei das Sicherheitsdokument bevorzugt eine Banknote, ein Identitätsdokument, ein Pass, ein Führerschein, ein Zertifikat, ein Scheck, ein Visum oder ein Stempel ist, und bevorzugt wobei das Polymersubstrat das Dokumentensubstrat ausmacht und das Sicherheitsdokument ferner wenigstens eine erste Trübungsschicht, die ein nicht transparentes Material umfasst, über der optischen Anpassungsschicht über einen dritten Bereich des Polymersubstrats umfasst, wobei der dritte Bereich wenigstens einen Spalt in den ersten Trübungsschichten definiert, wobei der Spalt wenigstens einen Teil des, bevorzugt den gesamten ersten Unterbereich derart einschließt, dass ein fokussiertes Bild der ersten Bildschicht durch den Spalt vorgezeigt wird.

22. Verfahren zum Herstellen einer Sicherheitsvorrichtung, Folgendes umfassend:

Bereitstellen eines Polymersubstrats (3) mit einer ersten und einer zweiten Oberfläche;

Ausbilden einer Anordnung von Fokussierelementen (11) als ein Oberflächenrelief über einen ersten Bereich des Polymersubstrats, wobei das Oberflächenrelief in der Oberfläche einer transparenten Grundschicht definiert ist, wobei die transparente Grundschicht entweder das Polymersubstrat oder eine darauf eingerichtete Schicht umfasst, wobei die Anordnung von Fokussierelementen konfiguriert ist, um eine einheitliche Grundbrennweite über den ersten Bereich aufzuweisen, wenn das Oberflächenrelief in Berührung mit Luft ist;

Aufbringen einer optischen Anpassungsschicht (15a, 15c) auf die transparente Grundschicht über einen zweiten Bereich des Polymersubstrats, wobei der zweite Bereich wenigstens einen ersten Unterbereich der Anordnung von Fokussierelementen einschließt, wobei der erste Unterbereich nicht den ganzen ersten Bereich einschließt, wobei die optische Anpassungsschicht eine erste Oberfläche in Berührung mit dem Oberflächenrelief und eine gegenüberliegende zweite Oberfläche mit einem Profil, das nicht wirksam ist, um sichtbares Licht zu fokussieren, aufweist, wobei die optische Anpassungsschicht ein erstes transparentes Material umfasst, das sich nur über den ersten Unterbereich der Anordnung von Fokussierelementen erstreckt, wobei das erste transparente Material einen Brechungsindex aufweist, der sich von dem der transparenten Grundschicht unterscheidet, wobei die Fokussierelemente in dem ersten Unterbereich der Anordnung eine erste Brennweite aufweisen, die sich von der Grundbrennweite unterscheidet; und

**gekennzeichnet durch** Ausbilden einer ersten Bildanordnung in wenigstens einem Teil des ersten Unterbereichs des Substrats, wobei die erste Bildanordnung in einer Ebene liegt, die von der der Fokussierelemente durch eine Entfernung beabstandet ist, die im Wesentlichen der ersten Brennweite entspricht, derart, dass die Fokussierelemente in dem ersten Unterbereich ein im Wesentlichen fokussiertes Bild der ersten Bildanordnung vorzeigen und die Fokussierelemente außerhalb des ersten Unterbereichs dies nicht tun.

## Revendications

1. Substrat de sécurité, comprenant :

   un substrat polymère (3) ayant une première et seconde surface ;
   un réseau d'éléments de focalisation (11) sous la forme d'un relief de surface dans toute une première région du substrat polymère, le relief de surface étant défini dans la surface d'une couche de base transparente (12), la couche de base transparente comprenant soit le substrat polymère soit une couche déposée dessus ;
une couche d'ajustement optique (15a, 15c) disposée sur la couche de base transparente sur une deuxième région du substrat polymère, laquelle deuxième région comprend au moins la première région, la couche d'ajustement optique ayant une première surface en contact avec le relief de surface de la couche de base transparente et une seconde surface opposée ayant un profil qui ne permet pas de focaliser la lumière visible, la couche d'ajustement optique comprenant un premier matériau transparent s'étendant sur une première sous-région du réseau d'éléments de focalisation, la première sous-région comprenant toute ou seulement une partie de la première région, le premier matériau transparent ayant un indice de réfraction différent de celui de la couche de base transparente, le ou les élément(s) de focalisation dans la première sous-région du réseau étant un ou des élément(s) de focalisation fonctionnel(s) ; et
**caractérisé par** au moins une première couche de masquage, comprenant un matériau réfléchissant et/ou non transparent, disposé sur la couche d'ajustement optique dans toute une troisième région du substrat polymère, la troisième région définissant au moins un intervalle dans la ou les premières couches de masquage, lequel intervalle comprend au moins une partie de la première sous-région, de sorte que des éléments de focalisation fonctionnels du réseau soient révélés à travers ledit intervalle.

2. Substrat de sécurité selon la revendication 1, dans lequel ledit intervalle dans la ou les première(s) couche(s) de masquage révèle seulement un sous-ensemble des éléments de focalisation fonctionnels du réseau, d'autres éléments de focalisation fonctionnels du réseau étant pratiquement cachés par la ou les première(s) couche(s) de masquage, au moins lorsque le substrat de sécurité est visualisé en lumière réfléchie depuis le côté du substrat de sécurité sur lequel sont disposée(s) la ou les première(s) couche(s) de masquage.

3. Substrat de sécurité selon la revendication 1 ou la revendication 2, dans lequel la couche d'ajustement optique comprend en outre un second matériau transparent s'étendant sur une seconde sous-région du réseau d'éléments de focalisation, le second matériau transparent ayant un indice de réfraction différent de celui du matériau transparent de base et du premier matériau transparent de sorte que le ou les élément(s) de focalisation dans la seconde sous-région du réseau soi(en)t un ou des élément(s) de focalisation fonctionnel(s) ayant une distance focale différente de celle des éléments de focalisation de la première sous-région du réseau.

4. Substrat de sécurité selon la revendication 1, 2 ou 3, dans lequel la couche d'ajustement optique comprend en outre un troisième matériau transparent s'étendant à travers une troisième sous-région du réseau d'éléments de focalisation, le troisième matériau transparent ayant un indice de réfraction pratiquement identique à celui du matériau de base transparent, de sorte que le ou les élément(s) de focalisation dans la troisième sous-région soi(en)t un ou des élément(s) de focalisation non fonctionnel(s).

5. Substrat de sécurité selon l'une quelconque des revendications précédentes, dans lequel la deuxième région recouverte par la couche d'ajustement optique s'étend sur pratiquement toute la surface du substrat de polymère.

6. Substrat de sécurité selon l'une quelconque des revendications précédentes, dans lequel le profil de la seconde surface de la couche d'ajustement optique est pratiquement plan.

7. Substrat de sécurité selon l'une quelconque des revendications précédentes, dans lequel le réseau d'éléments de focalisation comprend une structure en relief de surface convexe définie dans la surface du matériau de base transparent, le matériau de base transparent ayant un indice de réfraction supérieur à celui du premier matériau transparent et, le cas échéant, du deuxième matériau transparent ; ou dans lequel le réseau d'éléments de focalisation comprend une structure en relief de surface concave définie dans la surface du matériau de base transparent, le matériau de base transparent ayant un indice de réfraction inférieur à celui du premier matériau transparent et, le cas échéant, du deuxième matériau transparent.

8. Substrat de sécurité selon l'une quelconque des revendications précédentes, comprenant en outre un réseau d'images dans au moins une partie de la première sous-région du substrat de polymère, le réseau d'images situé dans un plan espacé de celui des éléments de focalisation par une distance correspondant pratiquement à une distance focale des éléments de focalisation fonctionnels dans ladite partie de la première sous-région, de telle sorte que les éléments de focalisation fonctionnels dans la première sous-région présentent une image pratiquement focalisée du réseau d'images, le réseau d'images s'étendant de préférence sur quasiment toute la première région ; et de préférence dans lequel : le réseau d'images est situé sur la seconde surface du substrat polymère ; ou la couche de base transparente comprend une couche disposée sur la première surface du substrat polymère et le réseau d'images est situé sur la première surface du substrat polymère.

9. Substrat de sécurité selon l'une quelconque des revendications précédentes, dans lequel le substrat de sécurité est un document de sécurité, de préférence un quelconque parmi :
un billet de banque, un document d'identité, un passeport, un permis, un certificat, un chèque, un visa ou un timbre, et ladite première couche de masquage est au moins une couche opacifiante comprenant un matériau non transparent.

10. Substrat de sécurité selon l'une quelconque des revendications précédentes, dans lequel le substrat de sécurité est un article de sécurité, de préférence un fil, une bande, une pièce ou un film de sécurité.

11. Procédé de fabrication d'un substrat de sécurité, consistant à :

fournir un substrat polymère (3) ayant une première et seconde surface ;
former un réseau d'éléments de focalisation (11) dans toute une première région du substrat polymère sous la forme d'un relief de surface dans la surface d'une couche de base transparente, la couche de base transparente comprenant soit le substrat polymère, soit une couche disposée dessus ;
appliquer une couche d'ajustement optique (15a, 15c) sur la couche de base transparente dans toute la deuxième région du substrat polymère, laquelle deuxième région comprend au moins la première région, la couche d'ajustement optique ayant une première surface en contact avec le relief de surface de la couche de base transparente et une seconde surface opposée ayant un profil qui ne permet pas de focaliser la lumière visible, la couche d'ajustement optique comprenant un premier matériau transparent s'étendant sur une première sous-région du réseau d'éléments de focalisation, la première sous-région comprenant toute ou seulement une partie de la première région, le premier matériau transparent ayant un indice de réfraction différent de celui de la couche de base transparente, le ou les élément(s) de focalisation dans la première sous-région du réseau étant un ou des élément(s) de focalisation fonctionnel(s) ; et
**caractérisé par** l'application d'au moins une première couche de masquage, comprenant un matériau réfléchissant et/ou non transparent, sur la couche d'ajustement optique dans toute une troisième région du substrat polymère, la troisième région définissant au moins un intervalle dans la ou les première(s) couche(s) de masquage, cet intervalle comprend au moins une partie de la première sous-région, de sorte que des éléments de focalisation fonctionnels du réseau soient révélés à travers ledit intervalle.

12. Un dispositif de sécurité, comprenant :

un substrat polymère (3) ayant une première et seconde surface ;
un réseau d'éléments de focalisation (11) sous la forme d'un relief de surface dans toute une première région du substrat polymère, le relief de surface étant défini dans la surface d'une couche de base transparente, la couche de base transparente comprenant soit le substrat polymère ou une couche disposée sur celui-ci, le réseau d'éléments de focalisation étant conçu pour avoir une distance focale de base uniforme sur la première région lorsque le relief de surface est en contact avec l'air ;
une couche d'ajustement optique (15a, 15c) disposée sur la couche de base transparente sur une seconde région du substrat polymère, laquelle seconde région comprend au moins une première sous-région du réseau d'éléments de focalisation, la première sous-région ne comprenant pas la totalité de la première région, la couche d'ajustement optique ayant une première surface en contact avec le relief de surface et une seconde surface opposée ayant un profil qui ne permet pas de focaliser la lumière visible, la couche d'ajustement optique comprenant un premier matériau transparent s'étendant uniquement à travers le première sous-région du réseau d'éléments de focalisation, le premier matériau transparent ayant un indice de réfraction différent de celui de la couche de base transparente, le ou les élément(s) de focalisation dans la première sous-région du réseau ayant une première distance focale qui est différente de la distance focale de base ; et
**caractérisé par** un premier réseau d'images dans au moins une partie de la première sous-région du substrat, le premier réseau d'images étant situé dans un plan espacé de celui des éléments de focalisation d'une distance correspondant pratiquement à la première distance focale, de sorte que les éléments de focalisation dans la première sous-région présentent une image pratiquement focalisée du premier réseau d'images, contrairement aux éléments de focalisation situés à l'extérieur de la première sous-région.

13. Dispositif de sécurité selon la revendication 12, dans lequel le premier réseau d'images est situé sur la seconde surface du substrat polymère.

14. Dispositif de sécurité selon la revendication 12 ou 13, dans lequel la couche d'ajustement optique comprend en outre un second matériau transparent s'étendant sur une seconde sous-région du réseau d'éléments de focalisation, le second matériau transparent ayant un indice de réfraction différent de celui de la couche de base transparente et différent de celui du premier matériau transparent, le ou les élément(s) de focalisation dans la seconde sous-région du réseau ayant une seconde distance focale différente de la première et de la distance focale de base, et le dispositif de sécurité comprenant de préférence en outre un second réseau d'images dans au moins une partie de la seconde sous-région du substrat, le second réseau d'images étant situé dans un plan espacé de celui des éléments de focalisation d'une distance correspondant pratiquement à la seconde distance focale, de telle sorte que les éléments de focalisation dans la seconde sous-région présentent une image pratiquement focalisée du second réseau d'images et contrairement aux éléments de focalisation en dehors de la seconde région, le second réseau d'images étant de préférence situé sur la première surface du substrat ou sur une couche d'espacement optique disposée sur la seconde surface du substrat.

15. Dispositif de sécurité selon l'une quelconque des revendications 12 à 14, dans lequel la couche d'ajustement optique comprend en outre un troisième matériau transparent s'étendant à travers une troisième sous-région du réseau d'éléments de focalisation, le troisième matériau transparent ayant un indice de réfraction pratiquement égal à celui de la couche de base transparente, le ou les élément(s) de focalisation dans la troisième sous-région du réseau n'étant pas opérationnels, et dans lequel le troisième matériau transparent s'étend de préférence sur le premier matériau transparent et/ou, le cas échéant, le deuxième matériau transparent, en contact avec le relief de surface uniquement dans la troisième sous-région, le troisième matériau transparent s'étendant de préférence sur pratiquement la totalité de la première région et plus préférablement la totalité de la deuxième région.

16. Dispositif de sécurité selon l'une quelconque des revendications 12 à 15, dans lequel la couche d'ajustement optique est absente dans toute une quatrième sous-région du réseau d'éléments de focalisation, de sorte que, dans la quatrième sous-région, les éléments de focalisation soient exposés à l'air et aient la distance focale de base et le dispositif de sécurité comprenant en outre de préférence un autre réseau d'images dans au moins une partie de la quatrième sous-région du substrat, le réseau d'images supplémentaire étant situé dans un plan espacé de celui des éléments de focalisation d'une distance correspondant pratiquement à la distance focale de base, de telle sorte que les éléments de focalisation dans la quatrième sous-région présentent une image pratiquement focalisée du réseau d'images supplémentaire et contrairement aux éléments de focalisation situés en dehors de la quatrième sous-région, le réseau d'images supplémentaires étant situé de préférence sur la première surface du substrat ou sur une couche d'espacement optique disposée sur la seconde surface du substrat.

17. Dispositif de sécurité selon l'une quelconque des revendications 12 à 16, dans lequel la deuxième région couverte par la couche d'ajustement optique s'étend pratiquement sur toute la surface du substrat polymère.

18. Dispositif de sécurité selon l'une quelconque des revendications 12 à 17, dans lequel le réseau d'éléments de focalisation comprend une structure en relief de surface convexe définie dans la surface du matériau de base transparent, le matériau de base transparent ayant un indice de réfraction supérieur à celui du premier matériau transparent et, le cas échéant, du deuxième matériau transparent ; ou dans lequel le réseau d'éléments de focalisation comprend une structure en relief de surface concave définie dans la surface du matériau de base transparent, le matériau de base transparent ayant un indice de réfraction inférieur à celui du premier matériau transparent et, le cas échéant, du deuxième matériau transparent.

19. Dispositif de sécurité selon l'une quelconque des revendications 12 à 18, dans lequel le profil de la seconde surface de la couche d'ajustement optique est pratiquement plan.

20. Un article de sécurité comprenant un dispositif de sécurité selon l'une quelconque des revendications 12 à 19, dans lequel l'article de sécurité est de préférence un fil, une bande, un film, une pièce ou une pièce de sécurité.

21. Un document de sécurité comprenant un dispositif de sécurité selon l'une quelconque des revendications 12 à 19 ou un article de sécurité selon la revendication 20, dans lequel le document de sécurité est de préférence un billet de banque, un document d'identité, un passeport, un permis, un certificat, un chèque, un visa ou un timbre, et de préférence dans lequel le substrat polymère constitue le substrat du document et le document de sécurité comprend en outre au moins une première couche opacifiante, comprenant un matériau non transparent, sur la couche d'ajustement optique dans toute une troisième région du substrat polymère, la troisième région définissant au moins un intervalle dans la ou les première(s) couche(s) opacifiante(s), lequel intervalle comprend au moins une partie, de préférence la totalité, de la première sous-région, de sorte qu'une image focalisée de la première couche d'images soit présentée à travers l'intervalle.

22. Un procédé de fabrication d'un dispositif de sécurité, consistant à :

fournir un substrat polymère (3) ayant une première et seconde surface ;
former un réseau d'éléments de focalisation (11) sous forme de relief de surface dans toute une première région du substrat polymère, le relief de surface étant défini dans la surface d'une couche de base transparente, la couche de base transparente comprenant soit le substrat polymère, soit une couche disposée dessus, le réseau d'éléments de focalisation étant conçu pour avoir une distance focale de base uniforme sur la première région lorsque le relief de surface est en contact avec l'air ;
appliquer une couche d'ajustement optique (15a, 15c) sur la couche de base transparente dans toute une seconde région du substrat polymère, laquelle seconde région comprend au moins une première sous-région du réseau d'éléments de focalisation, la première sous-région ne comprenant pas la totalité de la première région, la couche d'ajustement optique ayant une première surface en contact avec le relief de surface et une seconde surface opposée ayant un profil qui ne permet pas de focaliser la lumière visible, la couche d'ajustement optique comprenant un premier matériau transparent s'étendant uniquement sur le première sous-région du réseau d'éléments de focalisation, le premier matériau transparent ayant un indice de réfraction différent de celui de la couche de base transparente, le ou les élément(s) de focalisation dans la première sous-région du réseau ayant une première distance focale qui est différente de la distance focale de base ; et
**caractérisé par** la formation d'un premier réseau d'images dans au moins une partie de la première sous-région du substrat, le premier réseau d'images étant situé dans un plan espacé de celui des éléments de focalisation d'une distance correspondant pratiquement à la première distance focale, de telle sorte que les éléments de focalisation dans la première sous-région présentent une image pratiquement focalisée du premier réseau d'images, contrairement aux éléments de focalisation situés à l'extérieur de la première sous-région.

# Fig. 1

Fig. 2(a)

Fig. 2(b)

Fig. 3(a)

Fig. 3(b)

Fig. 4(b)

Fig. 4(a)

Fig. 5(b)

Fig. 5(a)

Fig. 6(a)

Fig. 6(b)

Fig. 7(a)

Fig. 7(b)

EP 3 319 811 B1

# Fig. 8(a)

# Fig. 8(b)

# Fig. 9(a)

# Fig. 9(b)

Fig. 10(a)

Fig. 10(b)

Fig. 11(a)

Fig. 11(b)

Fig. 12(a)

Fig. 12(b)

Fig. 12(c)

(i)

(ii)

A

B

# Fig. 13

# Fig. 14

NI    NI    NI
IM    IM

Emboss/recesses — A

Deboss/bumps — B

Grating — C

Moth-eye/fine pitch grating — D

Grating in recessed area — E

Grating in bump area — F

Rough/scattering area — G

Print on bump area — H

Aztec structured area — I

Ink in recess — J

Viewing (& lens) side

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1695121 A
- WO 9427254 A
- WO 2011107782 A
- WO 2011107783 A
- US 4892336 A
- WO 2011051669 A
- WO 2011051670 A
- WO 2012027779 A
- US 6856462 B
- GB 1313362 A

- GB 1313363 A
- US 20130270813 A
- US 6500526 B1
- WO 2014070079 A
- US 20090297805 A
- WO 2011102800 A
- WO 2005052650 A
- WO 2015044671 A
- GB 1510073 A